(19) Europäisches Patentamt
European Patent Office
Office européen des brevets

(11) **EP 4 631 359 A1**

(12) **EUROPEAN PATENT APPLICATION**

(43) Date of publication:
**15.10.2025 Bulletin 2025/42**

(21) Application number: **24170029.3**

(22) Date of filing: **12.04.2024**

(51) International Patent Classification (IPC):
*A23G 1/32* (2006.01)     *A23G 1/40* (2006.01)

(52) Cooperative Patent Classification (CPC):
**A23G 1/40; A23G 1/32**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **Chocoladefabriken Lindt & Sprüngli AG**
  **8802 Kilchberg (CH)**
- **SAVANNA Ingredients GmbH**
  **50189 Elsdorf (DE)**

(72) Inventors:
- **Cavegn-Bruderer, Anita**
  **8800 Thalwil (CH)**
- **Schiffer, Katja**
  **52441 Linnich (DE)**
- **Reissig, Tina**
  **50937 Köln (DE)**
- **Kaufmann, Birgit**
  **50933 Köln (DE)**

(74) Representative: **E. Blum & Co. AG**
**Franklinturm**
**Hofwiesenstrasse 349**
**8050 Zürich (CH)**

(54) **CHOCOLATE COMPRISING ALLULOSE**

(57)    The present disclosure relates to a chocolate composition comprising allulose and at least one ingredient from a cocoa bean selected from the group consisting of cocoa mass, cocoa powder, and cocoa butter; and a method of manufacturing such chocolate; in particular the present disclosure relates to a chocolate composition prepared by said method, and confectionary products comprising said chocolate composition.

Fig. 1

EP 4 631 359 A1

# EP 4 631 359 A1

**Description**

**Technical field**

The present disclosure relates to a chocolate composition comprising allulose and a method of manufacturing such chocolate; in particular the present disclosure relates to a chocolate composition prepared by said method, and confectionary products comprising said chocolate composition.

**Background**

Chocolate products are food products comprising a chocolate composition with characteristic sweet and cocoa taste. As such, chocolate is part of popular and famous confectionary products and is an important ingredient of desserts, confectionery products, and bakery products with its sweetness or other characteristics.

Commonly, chocolate or chocolate compositions comprise components of the cocoa bean, such as cocoa butter, cocoa mass, and/or cocoa powder, as well as milk powder, and sugar, such as sucrose.

Cocoa beans are the dried and fermented seeds of *Theobroma* cacao. As such, cocoa beans contain a high amount of fat which is also known as cocoa butter.

Sucrose has been a standard of caloric sweeteners since the early days of the chocolate industry. Due to its sensory properties and technical characteristics, sucrose is particularly suitable for this type of confectionery products. On the other hand, its nutritional characteristics may be criticized: In today's diet the sucrose is consumed in high quantities. This is associated with the development of diseases such as diabetes mellitus, both types I and II, tooth decay, obesity, and/or "sugar addiction". Even more strikingly, sucrose must not be consumed by patients suffering from diabetes mellitus or requires close medical monitoring. In the body, sucrose is rapidly metabolized to glucose and fructose, which can lead to severe hyperglycemia in diabetes patients.

Therefore, the high amounts of fat and sugar contained in chocolate might be associated with potential health risks. In fact, sucrose has a calorie value of 4 kcal/g, and therefore chocolate having sucrose as an essential component has a high calorie value.

As a consequence, chocolate manufacturers are trying to offer also chocolate products having a reduced sugar content. However, such reduction is usually achieved by partially or fully replacing the sugar with ingredients of lower calorie value, for example hydrogenated monosaccharides such as sorbitol, mannitol, xylitol, erythritol, or hydrogenated disaccharides such as maltitol, lactitol, hydrogenated isomaltulose (mixture of 1,6-glucopyranosyl sorbitol and 1,6-glycopyranosyl mannitol). However, such alternative sweeteners may have side effects, e.g. overconsumption causing diarrhea.

WO 2018/084538 relates to chocolate containing allulose and a method of preparing thereof, thus reducing the amount of sucrose added to chocolate.

Allulose is an epimer of carbon number 3 in fructose and has sweetness equivalent to 70% of sucrose. Allulose is a functional saccharide which controls blood glucose, prevents cavities, and inhibits lipogenesis in liver. However, it is described inter alia in WO 2018/084538 that allulose is difficult to handle in production of chocolate, because a tangling phenomenon occurs in the conching process and therefore the conching process cannot be carried out, when performed in a common chocolate production process.

Therefore, known chocolates comprising allulose instead of conventional sweeteners such as sucrose do not have the same taste and mouthfeel as common milk chocolates which is however required by the customers for such products.

**Summary of the disclosure**

There is still a further need to provide methods for the manufacture of confectionary products using ingredients, in particular non-caloric sweeteners, with good taste and sensory profile, e.g. mouthfeel, which is the same or almost the same as for presently commercialized confectionary products, such as milk chocolate. In particular, there is a need for methods of handling the confectionary compositions containing allulose during the production, in particular during conching, to avoid the inherent risk of grit formation and on the other hand to improve the taste and sensory properties of the confectionary products at the same time. Such confectionary products offer great opportunities to reduce or minimize the sugar intake and/or calorie intake for customers. Further, such sugar-reduced products have benefits for customers suffering from the above-mentioned health issues. There is a need to provide such confectionary products which have similar properties than presently commercialized confectionary products regarding one or more of the following sensory properties: melting behavior, milk intensity, cooling effect, texture, and sweetness.

It has been surprisingly found out, that confectionary products comprising allulose can not only be manufactured in a time and cost-efficient way but also result in high quality confectionary products with improved taste and mouthfeel, which is highly similar or identical to traditional milk chocolate containing sucrose.

The present disclosure relates to a chocolate composition comprising

i) at least one ingredient from a cocoa bean selected from the group consisting of cocoa mass, cocoa powder, and cocoa butter; and

ii) allulose.

In a further aspect, the present disclosure relates to a method of manufacturing a chocolate composition, the method comprising the steps of

a) providing at least one ingredient from a cocoa bean selected from the group consisting of cocoa mass, cocoa powder, and cocoa butter, and allulose; and

b) mixing the components from step a) to provide a composition I; and

c) conching the composition I to yield a chocolate composition according to the present disclosure.

In a further aspect, the present disclosure relates to a chocolate composition produced by the method according to the present disclosure.

In yet a further aspect, the present disclosure relates to a confectionary product comprising a chocolate composition according to the present disclosure.

## Description of Figures

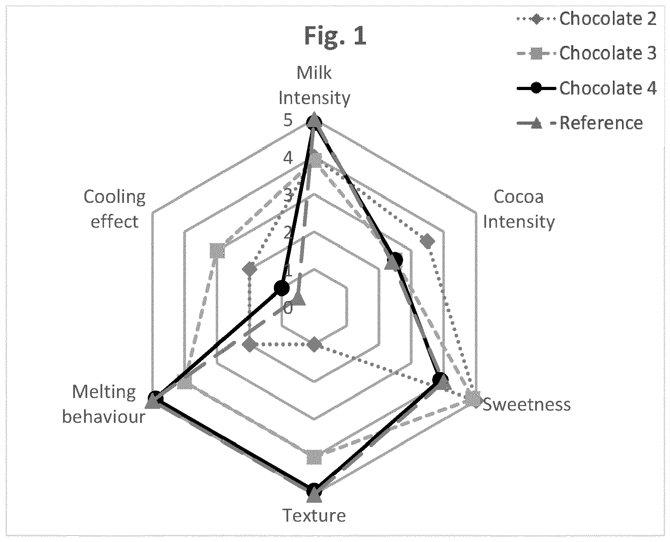

Figure 1: Spiderweb diagram of sensory evaluation of Experiment 2 (dotted line and diamond), Experiment 3 (small dashed line and squares), Experiment 4 (solid line and circles), and reference milk chocolate (large dashed line and triangles).

## Detailed Description

The present disclosure relates to a chocolate composition comprising

i) at least one ingredient from a cocoa bean selected from the group consisting of cocoa mass, cocoa powder, and cocoa butter; and

ii) allulose.

In a further aspect, the present disclosure relates to a method of manufacturing a chocolate composition, the method comprising the steps of

a) providing at least one ingredient from a cocoa bean selected from the group consisting of cocoa mass, cocoa powder, and cocoa butter; and allulose; and

b) mixing the components from step a) to provide a composition I; and

c) conching the composition I to yield a chocolate composition according to the present disclosure.

In a further aspect, the present disclosure relates to a chocolate composition produced by the method according to the present disclosure.

In yet a further aspect, the present disclosure relates to a confectionary product comprising a chocolate composition according to the present disclosure.

### The chocolate composition - General

It is understood that the chocolate composition according to the present disclosure comprises at least one ingredient from a cocoa bean selected from the group consisting of cocoa mass, cocoa powder, and cocoa butter.

According to a preferred embodiment of the present disclosure, the chocolate composition comprises cocoa mass, cocoa butter, and/or cocoa powder.. According to a preferred embodiment of the present disclosure, the chocolate composition comprises cocoa butter.

According to another preferred embodiment of the present disclosure, the chocolate composition comprises cocoa powder and cocoa butter.

According to another preferred embodiment of the present disclosure, the chocolate composition comprises cocoa mass, cocoa powder and cocoa butter.

According to a preferred embodiment of the present disclosure, the chocolate composition comprises cocoa mass in an amount of about 95 wt.-% or less based on the total weight of the chocolate composition. According to a preferred embodiment of the present disclosure, the chocolate composition comprises cocoa mass in an amount of about 80 wt.-% or less based on the total weight of the chocolate composition. According to another preferred embodiment of the present disclosure, the chocolate composition comprises cocoa mass in an amount of about 75 wt.-% or less based on the total weight of the chocolate composition. According to a further preferred embodiment of the present disclosure, the chocolate composition comprises cocoa mass in an amount of about 50 wt.-% or less based on the total weight of the chocolate composition. According to a further preferred embodiment of the present disclosure, the chocolate composition comprises cocoa mass in an amount of about 35 wt.-% or less based on the total weight of the chocolate composition. According to a further preferred embodiment of the present disclosure, the chocolate composition comprises cocoa mass in an amount of about 30 wt.-% or less based on the total weight of the chocolate composition. According to an even further preferred embodiment of the present disclosure, the chocolate composition comprises cocoa mass in an amount of about 25 wt.-% or less based on the total weight of the chocolate composition. According to a most further preferred embodiment of the present disclosure, the chocolate composition comprises cocoa mass in an amount of about 20 wt.-% or less based on the total weight of the chocolate composition.

According to a preferred embodiment of the present disclosure, the chocolate composition comprises cocoa mass in an amount of about 3 wt.-% or more based on the total weight of the chocolate composition. According to a preferred embodiment of the present disclosure, the chocolate composition comprises cocoa mass in an amount of about 5 wt.-% or more based on the total weight of the chocolate composition. According to another preferred embodiment of the present disclosure, the chocolate composition comprises cocoa mass in an amount of about 7 wt.-% or more based on the total weight of the chocolate composition. According to another preferred embodiment of the present disclosure, the chocolate composition comprises cocoa mass in an amount of about 10 wt.-% or more based on the total weight of the chocolate composition.

According to a preferred embodiment of the present disclosure, the chocolate composition comprises cocoa mass in an amount of from about 3 wt.-% to about 95 wt.-% based on the total weight of the chocolate composition. According to another preferred embodiment of the present disclosure, the chocolate composition comprises cocoa mass in an amount of from about 3 wt.-% to about 80 wt.-% based on the total weight of the chocolate composition. According to another preferred embodiment of the present disclosure, the chocolate composition comprises cocoa mass in an amount of from about 3 wt.-% to about 75 wt.-% based on the total weight of the chocolate composition. According to another preferred embodiment of the present disclosure, the chocolate composition comprises cocoa mass in an amount of from about 3 wt.-% to about 50 wt.-% based on the total weight of the chocolate composition.

According to a preferred embodiment of the present disclosure, the chocolate composition comprises cocoa mass in an amount of from about 3 wt.-% to about 35 wt.-% based on the total weight of the chocolate composition. In a further preferred embodiment of the present disclosure, the chocolate composition comprises cocoa mass in an amount of from 5 wt.-% to about 30 wt.-% based on the total weight of the chocolate composition. In a further preferred embodiment of the present disclosure, the chocolate composition comprises cocoa mass in an amount of from 7 wt.-% to 25 wt.-% based on the total weight of the chocolate composition. In a further preferred embodiment of the present disclosure, the chocolate composition comprises cocoa mass in an amount of from about 8 wt.-% to about 20 wt.-% based on the total weight of the chocolate composition.

According to a preferred embodiment of the present disclosure, the chocolate composition comprises cocoa powder in an amount of about 40 wt.-% or less based on the total weight of the chocolate composition. According to another preferred embodiment of the present disclosure, the chocolate composition comprises cocoa powder in an amount of about 35 wt.-% or less based on the total weight of the chocolate composition. According to another preferred embodiment of the present disclosure, the chocolate composition comprises cocoa powder in an amount of about 30 wt.-% or less based on the total weight of the chocolate composition. According to a further preferred embodiment of the present disclosure, the chocolate composition comprises cocoa powder in an amount of about 25 wt.-% or less based on the total weight of the chocolate composition.

According to a preferred embodiment of the present disclosure, the chocolate composition comprises cocoa powder in an amount of about 1 wt.-% or more based on the total weight of the chocolate composition. According to another preferred embodiment of the present disclosure, the chocolate composition comprises cocoa powder in an amount of about 2 wt.-% or more based on the total weight of the chocolate composition. According to another preferred embodiment of the present disclosure, the chocolate composition comprises cocoa powder in an amount of about 3 wt.-% or more based on the total weight of the chocolate composition. According to a further preferred embodiment of the present disclosure, the chocolate composition comprises cocoa powder in an amount of about 4 wt.-% or more based on the total weight of the chocolate composition.

According to a preferred embodiment of the present disclosure, the chocolate composition comprises cocoa powder in an amount of from about 1 wt.-% to about 40 wt.-% based on the total weight of the chocolate composition. According to another preferred embodiment of the present disclosure, the chocolate composition comprises cocoa powder in an amount of from about 1 wt.-% to about 25 wt.-% based on the total weight of the chocolate composition. According to a preferred embodiment of the present disclosure, the chocolate composition comprises cocoa powder in an amount of from about 1 wt.-% to about 18 wt.-% based on the total weight of the chocolate composition. In a further preferred embodiment of the present disclosure, the chocolate composition comprises cocoa powder in an amount of from 2 wt.-% to about 15 wt.-% based on the total weight of the chocolate composition. In a further preferred embodiment of the present disclosure, the chocolate composition comprises cocoa powder in an amount of from 3 wt.-% to 10 wt.-% based on the total weight of the chocolate composition. In a further preferred embodiment of the present disclosure, the chocolate composition comprises cocoa powder in an amount of from about 4 wt.-% to about 8 wt.-% based on the total weight of the chocolate composition.

According to a preferred embodiment of the present disclosure, the chocolate composition comprises cocoa butter in an amount of about 50 wt.-% or less based on the total weight of the chocolate composition. According to another preferred embodiment of the present disclosure, the chocolate composition comprises cocoa butter in an amount of about 40 wt.-% or less based on the total weight of the chocolate composition. According to another preferred embodiment of the present disclosure, the chocolate composition comprises cocoa butter in an amount of about 35 wt.-% or less based on the total weight of the chocolate composition. According to a further preferred embodiment of the present disclosure, the chocolate composition comprises cocoa butter in an amount of about 30 wt.-% or less based on the total weight of the chocolate composition. According to a yet further preferred embodiment of the present disclosure, the chocolate composition comprises cocoa butter in an amount of about 25 wt.-% or less based on the total weight of the chocolate composition. According to a further preferred embodiment of the present disclosure, the chocolate composition comprises cocoa butter in an amount of about 24 wt.-% or less based on the total weight of the chocolate composition.

According to a preferred embodiment of the present disclosure, the chocolate composition comprises cocoa butter in an amount of about 1 wt.-% or more based on the total weight of the chocolate composition. According to another preferred embodiment of the present disclosure, the chocolate composition comprises cocoa butter in an amount of about 5 wt.-% or more based on the total weight of the chocolate composition. According to another preferred embodiment of the present disclosure, the chocolate composition comprises cocoa butter in an amount of about 10 wt.-% or more based on the total weight of the chocolate composition. According to another preferred embodiment of the present disclosure, the chocolate composition comprises cocoa butter in an amount of about 15 wt.-% or more based on the total weight of the chocolate composition. According to a further preferred embodiment of the present disclosure, the chocolate composition comprises cocoa butter in an amount of about 20 wt.-% or more based on the total weight of the chocolate composition.

According to a preferred embodiment of the present disclosure, the chocolate composition comprises cocoa powder in an amount of from about 1 wt.-% to about 50 wt.-% based on the total weight of the chocolate composition. According to another preferred embodiment of the present disclosure, the chocolate composition comprises cocoa powder in an amount of from about 5 wt.-% to about 40 wt.-% based on the total weight of the chocolate composition. According to another preferred embodiment of the present disclosure, the chocolate composition comprises cocoa powder in an amount of from about 5 wt.-% to about 35 wt.-% based on the total weight of the chocolate composition.

According to a preferred embodiment of the present disclosure, the chocolate composition comprises cocoa butter in an amount of from about 10 wt.-% to about 35 wt.-% based on the total weight of the chocolate composition. In a further preferred embodiment of the present disclosure, the chocolate composition comprises cocoa butter in an amount of from about 15 wt.-% to about 30 wt.-% based on the total weight of the chocolate composition. In a further preferred embodiment of the present disclosure, the chocolate composition comprises cocoa butter in an amount of from about 17 wt.-% to about 25 wt.-% based on the total weight of the chocolate composition. In a further preferred embodiment of the present disclosure, the chocolate composition comprises cocoa butter in an amount of from about 20 wt.-% to about 24 wt.-% based on the total weight of the chocolate composition.

According to a preferred embodiment of the present disclosure, the chocolate composition further comprises milk powder. According to a further preferred embodiment of the present disclosure, the milk powder contains fat in an amount of from 0.1 wt.-% to 45 wt.-% based on the total weight of the milk powder.

According to a further preferred embodiment of the present disclosure, the milk powder is skim milk powder. According to a further preferred embodiment of the present disclosure, the skim milk powder contains fat in an amount of about 5 wt.-% or less based on the total weight of the skim milk powder. According to a further preferred embodiment of the present disclosure, the skim milk powder contains fat in an amount of about 4 wt.-% or less based on the total weight of the skim milk powder. According to a further preferred embodiment of the present disclosure, the skim milk powder contains fat in an amount of about 3 wt.-% or less based on the total weight of the skim milk powder. According to a further preferred embodiment of the present disclosure, the skim milk powder contains fat in an amount of about 2.5 wt.-% or less based on the total weight of the skim milk powder. According to a further preferred embodiment of the present disclosure, the skim milk powder contains fat in an amount of about 2 wt.-% or less based on the total weight of the skim milk powder. According to a further preferred embodiment of the present disclosure, the skim milk powder contains fat in an amount of about 1 wt.-% or less based on the total weight of the skim milk powder. According to a further preferred embodiment of the present disclosure, the skim milk powder contains fat in an amount of about 0.5 wt.-% or less based on the total weight of the skim milk powder. According to a further preferred embodiment of the present disclosure, the skim milk powder contains fat in an amount of about 0.1 wt.-% based on the total weight of the skim milk powder.

According to another preferred embodiment of the present disclosure, the milk powder is whole milk powder. According to a further preferred embodiment of the present disclosure, the whole milk powder contains fat in an amount of from about 20 wt.-% to about 50 wt.-% based on the total weight of the whole milk powder. According to a further preferred embodiment of the present disclosure, the whole milk powder contains fat in an amount of from about 20 wt.-% to about 40 wt.-% based on the total weight of the whole milk powder. According to a further preferred embodiment of the present disclosure, the whole milk powder contains fat in an amount of from about 20 wt.-% to about 30 wt.-% based on the total weight of the whole milk powder.. According to a further preferred embodiment of the present disclosure, the whole milk powder contains fat in an amount of from about 25 wt.-% to about 30 wt.-% based on the total weight of the whole milk powder.

According to a further preferred embodiment of the present disclosure, the whole milk powder contains fat in an amount of from about 20 wt.-% to about 30 wt.-% based on the total weight of the whole milk powder. According to a further preferred embodiment of the present disclosure, the whole milk powder contains fat in an amount of from about 25 wt.-% to about 30 wt.-% based on the total weight of the whole milk powder. According to a further preferred embodiment of the present disclosure, the whole milk powder contains fat in an amount of about 28 wt.-% or less based on the total weight of the whole milk.

According to a further preferred embodiment of the present disclosure, the chocolate composition comprises milk powder in an amount of about 35 wt.-% or less based on the total weight of the chocolate composition. According to another preferred embodiment of the present disclosure, the chocolate composition comprises milk powder in an amount of about 30 wt.-% or less based on the total weight of the chocolate composition. According to another preferred embodiment of the present disclosure, the chocolate composition comprises milk powder in an amount of about 29 wt.-% or less based on the total weight of the chocolate composition. According to another preferred embodiment of the present disclosure, the chocolate composition comprises milk powder in an amount of about 28 wt.-% or less based on the total weight of the chocolate composition.

According to a further preferred embodiment of the present disclosure, the chocolate composition comprises milk powder in an amount of from about 5 wt.-% to about 35 wt.-% based on the total weight of the chocolate composition. According to another preferred embodiment of the present disclosure, the chocolate composition comprises milk powder in an amount of from about 8 wt.-% to about 30 wt.-% based on the total weight of the chocolate composition. According to another preferred embodiment of the present disclosure, the chocolate composition comprises milk powder in an amount of from about 10 wt.-% to about 29 wt.-% based on the total weight of the chocolate composition. According to another preferred embodiment of the present disclosure, the chocolate composition comprises milk powder in an amount of from about 12 wt.-% to about 28 wt.-% based on the total weight of the chocolate composition.

According to a further preferred embodiment of the present disclosure, the chocolate composition comprises allulose in an amount of from about 10 wt.-% to about 60 wt.-% based on the total weight of the chocolate composition. According to another preferred embodiment of the present disclosure, the chocolate composition comprises allulose in an amount of from about 15 wt.-% to about 50 wt.-% based on the total weight of the chocolate composition. According to another preferred embodiment of the present disclosure, the chocolate composition comprises allulose in an amount of from about 20 wt.-% to about 45 wt.-% based on the total weight of the chocolate composition. According to another preferred embodiment of the present disclosure, the chocolate composition comprises allulose in an amount of from about 20 wt.-% to about 40 wt.-% based on the total weight of the chocolate composition. According to another preferred embodiment of the present disclosure, the chocolate composition comprises allulose in an amount of from about 22 wt.-% to about 38 wt.-% based on the total weight of the chocolate composition. According to another preferred embodiment of the present disclosure, the chocolate composition comprises allulose in an amount of from about 22 wt.-% to about 37 wt.-% based on the total weight of the chocolate composition.

In the sense of the present disclosure, it is understood that the allulose is comprised in the chocolate composition. In other words, the allulose is present in the chocolate composition comprised in a confectionary product. For the case that a confectionary product according to the present disclosure comprises a chocolate composition according to the present disclosure and a filling, it is understood that the chocolate composition comprises of from about 10 wt.-% to about 60 wt.-% of allulose, preferably of from about 15 wt.-% to about 50 wt.-% of allulose, more preferably of from about 20 wt.-% to about 45 wt.-% of allulose, even more preferably of from about 20 wt.-% to about 40 wt.-% of allulose, even more preferably of from about 22 wt.-% to about 38 wt.-% of allulose, most preferably of from about 22 wt.-% to about 37 wt.-% of allulose, each based on the total weight of the chocolate composition.

According to a further preferred embodiment of the present disclosure, the allulose is provided in the form of a powder. According to a further preferred embodiment of the present disclosure, allulose is provided in a crystalline form.

According to another preferred embodiment of the present disclosure, the allulose has an amorphous content in an amount of about 20 wt.-% or less based on the total weight of the allulose. According to another preferred embodiment of the present disclosure, the allulose has an amorphous content in an amount of about 18 wt.-% or less based on the total weight of the allulose. According to another preferred embodiment of the present disclosure, the allulose has an amorphous content in an amount of about 16 wt.-% or less based on the total weight of the allulose. According to another preferred embodiment of the present disclosure, the allulose has an amorphous content in an amount of about 14 wt.-% or less based on the total weight of the allulose. According to another preferred embodiment of the present disclosure, the allulose has an amorphous content in an amount of about 12 wt.-% or less based on the total weight of the allulose. According to a further preferred embodiment of the present disclosure, the allulose has an amorphous content in an amount of about 10 wt.-% or less based on the total weight of the allulose. According to another preferred embodiment of the present disclosure, the allulose has an amorphous content in an amount of about 8 wt.-% or less based on the total weight of the allulose. According to another preferred embodiment of the present disclosure, the allulose has an amorphous content in an amount of about 6 wt.-% or less based on the total weight of the allulose. According to another preferred embodiment of the present disclosure, the allulose has an amorphous content in an amount of about 5 wt.-% or less based on the total weight of the allulose. According to another preferred embodiment of the present disclosure, the allulose has an amorphous content in an amount of about 4 wt.-% or less based on the total weight of the allulose. According to another preferred embodiment of the present disclosure, the allulose has an amorphous content in an amount of about 3 wt.-% or less based on the total weight of the allulose. According to another preferred embodiment of the present disclosure, the allulose has an amorphous content in an amount of about 2 wt.-% or less based on the total weight of the allulose. According to another preferred embodiment of the present disclosure, the allulose has an amorphous content in an amount of about 1 wt.-% or less based on the total weight of the allulose.

According to a further preferred embodiment of the present disclosure, the allulose has a moisture content of about 5 wt.-% or less based on the total weight of the allulose. According to another preferred embodiment of the present disclosure, the allulose has a moisture content of about 4 wt.-% or less based on the total weight of the allulose. According to another preferred embodiment of the present disclosure, the allulose has a moisture content of about 3 wt.-% or less based on the total weight of the allulose. According to another preferred embodiment of the present disclosure, the allulose has a moisture content of about 2.5 wt.-% or less based on the total weight of the allulose. According to another preferred embodiment of the present disclosure, the allulose has a moisture content of about 2 wt.-% or less based on the total weight of the allulose. According to another preferred embodiment of the present disclosure, the allulose has a moisture content of about 1.5 wt.-% or less based on the total weight of the allulose. According to another preferred embodiment of the present disclosure, the allulose has a moisture content of about 1.0 wt.-% or less based on the total weight of the allulose. According to another preferred embodiment of the present disclosure, the allulose has a moisture content of about 0.9 wt.-% or less based on the total weight of the allulose. According to another preferred embodiment of the present disclosure, the allulose has a moisture content of about 0.8 wt.-% or less based on the total weight of the allulose. According to another preferred embodiment of the present disclosure, the allulose has a moisture content of about 0.7 wt.-% or less based on the total weight of the allulose. According to another preferred embodiment of the present disclosure, the allulose has a moisture content of about 0.6 wt.-% or less based on the total weight of the allulose. According to another preferred embodiment of the present disclosure, the allulose has a moisture content of about 0.5 wt.-% or less based on the total weight of the allulose. According to another preferred embodiment of the present disclosure, the allulose has a moisture content of about 0.4 wt.-% or less based on the total weight of the allulose. According to another preferred embodiment of the present disclosure, the allulose has a moisture content of about 0.3 wt.-% or less based on the total weight of the allulose. According to another preferred embodiment of the present disclosure, the allulose has a moisture content of about 0.2 wt.-% or less based on the total weight of the allulose. According to another preferred embodiment of the present disclosure, the allulose has a moisture content of about 0.1 wt.-% or less based on the total weight of the allulose.

According to a further preferred embodiment of the present disclosure, the chocolate composition further comprises a caloric sweetener.

According to a further preferred embodiment of the present disclosure, the caloric sweetener is selected from the group consisting of glucose, fructose, sucrose, maltose, galactose, invert sugar, trehalose, tagatose, honey, agave sugar, coconut blossom sugar, brown sugar, cacao fruit sugar, maple sugar, molasses, rice syrup, isomaltulose, kojibiose, L-arabiose, ribose, sorbose, yacon syrup, lactose, laetose, allose and mixtures thereof.

According to a further preferred embodiment of the present disclosure, the chocolate composition comprises the caloric sweetener in an amount of about 20 wt.-% or less based on the total weight of the chocolate composition, preferably in an amount of about 19 wt.-% or less based on the total weight of the chocolate composition, more preferably in an amount of about 18 wt.-% or less based on the total weight of the chocolate composition.

According to a further preferred embodiment of the present disclosure, the chocolate composition, further comprises a bulking agent.

According to a further preferred embodiment of the present disclosure, the chocolate composition comprises the bulking agent in an amount of from about 1 wt.-% to about 40 wt.-% based on the total weight of the chocolate composition. According to another preferred embodiment of the present disclosure, the chocolate composition comprises the bulking agent in an amount of from about 5 wt.-% to about 30 wt.-% based on the total weight of the chocolate composition. According to another preferred embodiment of the present disclosure, the chocolate composition comprises the bulking agent in an amount of from about 10 wt.-% to about 25 wt.-% based on the total weight of the chocolate composition. According to another preferred embodiment of the present disclosure, the chocolate composition comprises the bulking agent in an amount of from about 12 wt.-% to about 22 wt.-% based on the total weight of the chocolate composition. According to another preferred embodiment of the present disclosure, the chocolate composition comprises the bulking agent in an amount of from about 15 wt.-% to about 20 wt.-% based on the total weight of the chocolate composition.

According to a further preferred embodiment of the present disclosure, the bulking agent is selected from the group consisting of polydextrose, maltodextrin, oligofructose, fibers, dextrin, inulin, acacia fibre, arabinoxylan, beet root fibre, cassava fibre, cocoa shell powder, corn starch, guar gum, gum acaia, locust bean gum, rice starch, corn fibre and mixtures thereof.

According to a further preferred embodiment of the present disclosure, the chocolate composition further comprises an emulsifier.

According to a further preferred embodiment of the present disclosure, the emulsifier is selected from the group consisting of lecithin, monoglycerin fatty acid ester, sorbitan fatty acid ester, polyglycerin polyricinoleate, and mixtures thereof. According to another preferred embodiment of the present disclosure, the emulsifier is lecithin. According to another preferred embodiment of the present disclosure, the emulsifier is soy lecithin.

According to a further preferred embodiment of the present disclosure, the chocolate composition comprises the emulsifier in an amount of about 5 wt.-% or less based on the total weight of the chocolate composition. According to another preferred embodiment of the present disclosure, the chocolate composition comprises the emulsifier in an amount of about 3 wt.-% or less based on the total weight of the chocolate composition. According to another preferred embodiment of the present disclosure, the chocolate composition comprises the emulsifier in an amount of about 2 wt.-% or less based on the total weight of the chocolate composition. According to another preferred embodiment of the present disclosure, the chocolate composition comprises the emulsifier in an amount of about 1 wt.-% or less based on the total weight of the chocolate composition. According to another preferred embodiment of the present disclosure, the chocolate composition comprises the emulsifier in an amount of about 0.75 wt.-% or less based on the total weight of the chocolate composition.

According to a further preferred embodiment of the present disclosure, the chocolate composition further comprises a flavoring agent.

According to a further preferred embodiment of the present disclosure, the flavoring agent is selected from the group consisting of vanilla flavor, malt flavor, caramel flavor, milk flavor, and mixtures thereof.

According to a further preferred embodiment of the present disclosure, the chocolate composition comprises about 75 % or less of a caloric sweetener based on the content of caloric sweetener comprised in a standard milk chocolate. According to another preferred embodiment of the present disclosure, the chocolate composition comprises about 70 % or less of a caloric sweetener based on the content of caloric sweetener comprised in a standard milk chocolate. According to another preferred embodiment of the present disclosure, the chocolate composition comprises about 60 % or less of a caloric sweetener based on the content of caloric sweetener comprised in a standard milk chocolate. According to another preferred embodiment of the present disclosure, the chocolate composition comprises about 50 % or less of a caloric sweetener based on the content of caloric sweetener comprised in a standard milk chocolate.

In the sense of the present disclosure, a standard milk chocolate has a content of caloric sweetener in the range of from about 45 to about 60 wt.-%, preferably of from about 50 to about 55 wt.-%, more preferably of from about 51 to about 54 wt.-%, most preferably about 52 wt.-% or about 53 wt.-% based on the total weight of the standard milk chocolate.

According to a further preferred embodiment of the present disclosure, the chocolate composition does not show a "cooling effect" in the mouth upon sensory evaluation.

Sugar-reduced milk chocolate composition

According to one embodiment of the present disclosure, the chocolate composition is a sugar-reduced milk chocolate composition i.e. a chocolate composition, wherein the amount of caloric sweetener has been reduced compared to a standard milk chocolate, e.g. a milk chocolate having between about 45 wt.-% and about 60 wt.-% caloric sweetener.

According to a preferred embodiment of the present disclosure, the sugar-reduced milk chocolate composition comprises the caloric sweetener in an amount of about 25 wt.-% or less based on the total weight of the sugar-reduced milk chocolate composition. According to another preferred embodiment of the present disclosure, the sugar-reduced milk chocolate composition comprises the caloric sweetener in an amount of about 22 wt.-% or less based on the total weight of the sugar-reduced milk chocolate composition. According to another preferred embodiment of the present disclosure, the sugar-reduced milk chocolate composition comprises the caloric sweetener in an amount of about 20 wt.-% or less based on the total weight of the sugar-reduced milk chocolate composition.

According to a preferred embodiment of the present disclosure, the sugar-reduced milk chocolate composition comprises the caloric sweetener in an amount of from about 10 wt.-% to about 30 wt.-% based on the total weight of the sugar-reduced milk chocolate composition. According to another preferred embodiment of the present disclosure, the sugar-reduced milk chocolate composition comprises the caloric sweetener in an amount of from about 14 wt.-% to about 25 wt.-% based on the total weight of the sugar-reduced milk chocolate composition. According to another preferred embodiment of the present disclosure, the sugar-reduced milk chocolate composition comprises the caloric sweetener in an amount of from about 15 wt.-% to about 20 wt.-% based on the total weight of the sugar-reduced milk chocolate composition. According to another preferred embodiment of the present disclosure, the sugar-reduced milk chocolate composition comprises the caloric sweetener in an amount of from about 17 wt.-% to about 19 wt.-% based on the total weight of the sugar-reduced milk chocolate composition.

Preferably, the amount of the caloric sweetener used in the sugar-reduced milk chocolate composition according to the present disclosure is less than the amount of allulose used in the chocolate composition.

According to a further preferred embodiment, the amount of the caloric sweetener comprised in the sugar-reduced milk chocolate composition is equal to or lower than the amount of allulose. In a preferred embodiment, the ratio of the amount of caloric sweetener and the amount of allulose applied is in the range of 1:1 to 1:50, preferably 1:1 to 1:35, more preferably 1:1 to 1:20, more preferably 1:1 to 1:15, more preferably 1:1 to 1:10, even more preferably 1:1 to 1:5, yet more preferably 1:1 to 1:3, yet more preferable 1:1 to 1:2, most preferably 1:1 to 1:1,5.

According to a further preferred embodiment of the present disclosure, the sugar-reduced milk chocolate composition has a calorie content of about 560 kcal per 100 g of the sugar-reduced milk chocolate composition or less. According to another preferred embodiment of the present disclosure, the sugar-reduced milk chocolate composition has a calorie content of about 537 kcal per 100 g of the sugar-reduced milk chocolate composition or less. According to another preferred embodiment of the present disclosure, the sugar-reduced milk chocolate composition has a calorie content of about 500 kcal per 100 g of the sugar-reduced milk chocolate composition or less. According to another preferred embodiment of the present disclosure, the sugar-reduced milk chocolate composition has a calorie content of about 470 kcal per 100 g of the sugar-reduced milk chocolate composition or less.

According to a further preferred embodiment of the present disclosure, the sugar-reduced milk chocolate composition has a calorie content in the range of from about 200 to about 560 kcal per 100 g of the sugar-reduced milk chocolate composition. According to another preferred embodiment of the present disclosure, the sugar-reduced milk chocolate composition has a calorie content in the range of from about 200 to about 537 kcal per 100 g of the sugar-reduced milk chocolate composition. According to another preferred embodiment of the present disclosure, the sugar-reduced milk chocolate composition has a calorie content in the range of from about 200 to about 537 kcal per 100 g of the sugar-reduced milk chocolate composition. According to another preferred embodiment of the present disclosure, the sugar-reduced milk chocolate composition has a calorie content in the range of from about 200 to about 500 kcal per 100 g of the sugar-reduced milk chocolate composition. According to another preferred embodiment of the present disclosure, the sugar-reduced milk chocolate composition has a calorie content in the range of from about 250 to about 500 kcal per 100 g of the sugar-reduced milk chocolate composition. According to another preferred embodiment of the present disclosure, the sugar-reduced milk chocolate composition has a calorie content in the range of from about 300 to about 470 kcal per 100 g of the sugar-reduced milk chocolate composition. According to another preferred embodiment of the present disclosure, the sugar-reduced milk chocolate composition has a calorie content in the range of from about 350 to about 470 kcal per 100 g of the sugar-reduced milk chocolate composition.

According to a further preferred embodiment of the present disclosure, the sugar-reduced milk chocolate composition comprises

a) cocoa mass in an amount of from about 8 wt.-% to about 12 wt.-%, and
b) cocoa butter in an amount of from about 20 wt.-% to about 24 wt.-%, and
c) allulose in an amount of from about 22 wt.-% to about 26 wt.-%, and
d) milk powder in an amount of from about 24 wt.-% to about 28 wt.-%, and
e) a caloric sweetener in an amount of from about 15 wt.-% to about 19 wt.-%, each based on the total weight of the sugar-reduced milk chocolate composition.

Calorie-reduced milk chocolate composition

According to one embodiment of the present disclosure, the chocolate composition is a calorie-reduced milk chocolate composition.

In another preferred embodiment, the amount of caloric sweetener used is lower than the amount of allulose in the chocolate composition according to the present disclosure (e.g. such as the ratios indicated above) and the calorie-reduced milk chocolate composition further comprises 30 wt.-% or less milk powder, preferably whole milk powder.

According to a further preferred embodiment of the present disclosure, the calorie-reduced milk chocolate composition comprises the caloric sweetener in an amount of about 5 wt.-% or less based on the total weight of the calorie-reduced milk chocolate composition. According to another preferred embodiment of the present disclosure, the calorie-reduced milk chocolate composition comprises the caloric sweetener in an amount of about 2.5 wt.-% or less based on the total weight of the calorie-reduced milk chocolate composition. According to another preferred embodiment of the present disclosure, the calorie-reduced milk chocolate composition comprises the caloric sweetener in an amount of about 2 wt.-% or less based on the total weight of the calorie-reduced milk chocolate composition. According to another preferred embodiment of the present disclosure, the calorie-reduced milk chocolate composition comprises the caloric sweetener in an amount of about 1.5 wt.-% or less based on the total weight of the calorie-reduced milk chocolate composition.

According to a further preferred embodiment of the present disclosure, the calorie-reduced milk chocolate composition comprises the caloric sweetener in an amount of about 1 wt.-% based on the total weight of the calorie-reduced milk chocolate composition.

According to a yet further preferred embodiment of the present disclosure, the calorie-reduced milk chocolate composition comprises the caloric sweetener in an amount in the range of from about 0.1 wt.-% to about 1.5 wt.-% based on the total weight of the calorie-reduced milk chocolate composition.

According to a further preferred embodiment of the present disclosure, the calorie-reduced milk chocolate composition does not comprise a caloric sweetener.

According to a further preferred embodiment of the present disclosure, the calorie-reduced milk chocolate composition does not comprise any sweetener other than allulose.

According to a further preferred embodiment of the present disclosure, the calorie-reduced milk chocolate composition has a calorie content of about 420 kcal per 100 g of the calorie-reduced milk chocolate composition or less. According to another embodiment of the present disclosure, the calorie-reduced milk chocolate composition has a calorie content of about 400 kcal per 100 g of the calorie-reduced milk chocolate composition or less. According to another preferred embodiment of the present disclosure, the calorie-reduced milk chocolate composition has a calorie content of about 390 kcal per 100 g of the calorie-reduced milk chocolate composition or less. According to another preferred embodiment of the present disclosure, the calorie-reduced milk chocolate composition has a calorie content of about 387 kcal per 100 g of the calorie-reduced milk chocolate composition or less.

According to a further preferred embodiment of the present disclosure, the calorie-reduced milk chocolate composition has a calorie content in the range of from about 100 to about 420 kcal per 100 g of the calorie-reduced milk chocolate composition. According to another preferred embodiment of the present disclosure, the calorie-reduced milk chocolate composition has a calorie content in the range of from about 200 to about 400 kcal per 100 g of the calorie-reduced milk chocolate composition. According to another preferred embodiment of the present disclosure, the calorie-reduced milk chocolate composition has a calorie content in the range of from about 250 to about 380 kcal per 100 g of the calorie-reduced milk chocolate composition. According to another preferred embodiment of the present disclosure, the calorie-reduced milk chocolate composition has a calorie content in the range of from about 280 to about 387 kcal per 100 g of the calorie-reduced milk chocolate composition.

According to a further preferred embodiment of the present disclosure, the calorie-reduced milk chocolate composition comprises

a) cocoa mass in an amount of from about 8 wt.-% to about 12 wt.%, and
b) cocoa butter in an amount of from about 20 wt.-% to about 24 wt.%, and
c) allulose in an amount of from about 33 wt.-% to about 37 wt.%, and
d) milk powder in an amount of from about 12 wt.-% to 16 wt.%, and
e) a caloric sweetener in an amount of from about 2 wt.-% or less, each based on the total weight of the calorie-reduced milk chocolate composition.

Dark chocolate composition

According to one embodiment of the present disclosure, the chocolate composition is a dark chocolate composition. It is understood that a dark chocolate composition may contain high amounts of cocoa mass, and cocoa powder, and optionally cocoa butter. On the other hand, the dark chocolate composition comprises milk components in an amount of 10 wt.-% or less.

Sugar-reduced dark chocolate composition

According to one embodiment of the present disclosure, the chocolate composition is a sugar-reduced dark chocolate composition. It is understood that a sugar-reduced dark chocolate comprises milk components in an amount of 15 wt.-% or less based on the total weight of the sugar-reduced dark chocolate.

According to a preferred embodiment, the sugar-reduced dark chocolate comprises milk components in an amount of 10 wt.-% or less. According to a preferred embodiment, the sugar-reduced dark chocolate comprises milk components in an amount of 7 wt.-% or less. According to another preferred embodiment, the sugar-reduced dark chocolate comprises milk components in an amount of 5 wt.-% or less. According to a further preferred embodiment, the sugar-reduced dark chocolate comprises milk components in an amount of 2 wt.-% or less. According to a further preferred embodiment, the sugar-reduced dark chocolate comprises milk components in an amount of 1 wt.-% or less. According to a further preferred embodiment, the sugar-reduced dark chocolate comprises milk components in an amount of 0.5 wt.-% or less. According to an even further preferred embodiment, the sugar-reduced dark chocolate does not contain milk components. In this way, a sugar-reduced dark chocolate composition can be obtained.

According to a further preferred embodiment of the present disclosure, the sugar-reduced dark chocolate composition has a calorie content of about 550 kcal per 100 g of the sugar-reduced dark chocolate composition or less. According to another preferred embodiment of the present disclosure, the sugar-reduced dark chocolate composition has a calorie content of about 530 kcal per 100 g of the sugar-reduced dark chocolate composition or less. According to another preferred embodiment of the present disclosure, the sugar-reduced dark chocolate composition has a calorie content of about 510 kcal per 100 g of the sugar-reduced dark chocolate composition or less. According to another preferred embodiment of the present disclosure, the sugar-reduced dark chocolate composition has a calorie content of about 500 kcal per 100 g of the sugar-reduced dark chocolate composition or less. In other word, the sugar-reduced dark chocolate composition according to the present disclosure has a reduced calorie value as compared to standard and commercially available dark chocolates.

According to a further preferred embodiment of the present disclosure, the sugar-reduced dark chocolate composition has a calorie content in the range of from about 300 to about 550 kcal per 100 g of the sugar-reduced dark chocolate composition. According to another preferred embodiment of the present disclosure, the sugar-reduced dark chocolate composition has a calorie content in the range of from about 350 to about 530 kcal per 100 g of the sugar-reduced dark chocolate composition. According to another preferred embodiment of the present disclosure, the sugar-reduced dark chocolate composition has a calorie content in the range of from about 380 to about 510 kcal per 100 g of the sugar-reduced dark chocolate composition. According to another preferred embodiment of the present disclosure, the sugar-reduced dark chocolate composition has a calorie content in the range of from about 400 to about 500 kcal per 100 g of the sugar-reduced dark chocolate composition. In other word, the sugar-reduced dark chocolate composition according to the present disclosure has a reduced calorie value as compared to standard and commercially available dark chocolates.

According to another preferred embodiment of the present disclosure, the sugar-reduced dark chocolate composition comprises the caloric sweetener in an amount of about 35 wt.-% or less based on the total weight of the sugar-reduced dark chocolate composition. According to another preferred embodiment of the present disclosure, the sugar-reduced dark chocolate composition comprises the caloric sweetener in an amount of about 30 wt.-% or less based on the total weight of the sugar-reduced dark chocolate composition. According to another preferred embodiment of the present disclosure, the sugar-reduced dark chocolate composition comprises the caloric sweetener in an amount of about 27 wt.-% or less based on the total weight of the sugar-reduced dark chocolate composition.

According to another preferred embodiment of the present disclosure, the sugar-reduced dark chocolate composition comprises the caloric sweetener in an amount of from about 15 wt.-% to about 35 wt.-% based on the total weight of the sugar-reduced dark chocolate composition. According to another preferred embodiment of the present disclosure, the sugar-reduced dark chocolate composition comprises the caloric sweetener in an amount of from about 17 wt.-% to about 30 wt.-% based on the total weight of the sugar-reduced dark chocolate composition. According to another preferred embodiment of the present disclosure, the sugar-reduced dark chocolate composition comprises the caloric sweetener in an amount of from about 20 wt.-% to about 27 wt.-% based on the total weight of the sugar-reduced dark chocolate composition. According to another preferred embodiment of the present disclosure, the sugar-reduced dark chocolate composition comprises the caloric sweetener in an amount of from about 22 wt.-% to about 26 wt.-% based on the total weight of the sugar-reduced dark chocolate composition. Thus, the sugar-reduced dark chocolate composition according to the present disclosure contains less caloric sweetener, such as sucrose, as compared to standard, commercially available dark chocolates. Thus, the potential health risks of caloric sweeteners may be circumvented without impacting the taste.

According to another preferred embodiment of the present disclosure, the sugar-reduced dark chocolate composition comprises cocoa mass in an amount of from about 20 wt.-% to about 95 wt.-% based on the total weight of the sugar-reduced dark chocolate composition. According to another preferred embodiment of the present disclosure, the sugar-reduced dark chocolate composition comprises cocoa mass in an amount of from about 20 wt.-% to about 80 wt.-% based on the total weight of the sugar-reduced dark chocolate composition. According to another preferred embodiment of the present disclosure, the sugar-reduced dark chocolate composition comprises cocoa mass in an amount of from about 20 wt.-% to about 75 wt.-% based on the total weight of the sugar-reduced dark chocolate composition. According to another preferred embodiment of the present disclosure, the sugar-reduced dark chocolate composition comprises cocoa mass in an amount of from about 20 wt.-% to about 70 wt.-% based on the total weight of the sugar-reduced dark chocolate composition. According to another preferred embodiment of the present disclosure, the sugar-reduced dark chocolate composition comprises cocoa mass in an amount of from about 25 wt.-% to about 60 wt.-% based on the total weight of the sugar-reduced dark chocolate composition. According to another preferred embodiment of the present disclosure, the

EP 4 631 359 A1

sugar-reduced dark chocolate composition comprises cocoa mass in an amount of from about 30 wt.-% to about 55 wt.-% based on the total weight of the sugar-reduced dark chocolate composition. According to another preferred embodiment of the present disclosure, the sugar-reduced dark chocolate composition comprises cocoa mass in an amount of from about 32 wt.-% to about 53 wt.-% based on the total weight of the sugar-reduced dark chocolate composition. According to another preferred embodiment of the present disclosure, the sugar-reduced dark chocolate composition comprises cocoa mass in an amount of from about 33 wt.-% to about 51 wt.-% based on the total weight of the sugar-reduced dark chocolate composition. According to another preferred embodiment of the present disclosure, the sugar-reduced dark chocolate composition comprises cocoa mass in an amount of from about 33 wt.-% to about 50 wt.-% based on the total weight of the sugar-reduced dark chocolate composition. According to another preferred embodiment of the present disclosure, the sugar-reduced dark chocolate composition comprises cocoa mass in an amount of from about 34 wt.-% to about 48 wt.-% based on the total weight of the sugar-reduced dark chocolate composition. According to another preferred embodiment of the present disclosure, the sugar-reduced dark chocolate composition comprises cocoa mass in an amount of from about 35 wt.-% to about 46 wt.-% based on the total weight of the sugar-reduced dark chocolate composition.

According to another preferred embodiment of the present disclosure, the sugar-reduced dark chocolate composition comprises cocoa butter in an amount of from about 0 wt.-% to about 25 wt.-% based on the total weight of the sugar-reduced dark chocolate composition. According to another preferred embodiment of the present disclosure, the sugar-reduced dark chocolate composition comprises cocoa butter in an amount of from about 3 wt.-% to about 20 wt.-% based on the total weight of the sugar-reduced dark chocolate composition. According to another preferred embodiment of the present disclosure, the sugar-reduced dark chocolate composition comprises cocoa butter in an amount of from about 5 wt.-% to about 15 wt.-% based on the total weight of the sugar-reduced dark chocolate composition. According to another preferred embodiment of the present disclosure, the sugar-reduced dark chocolate composition comprises cocoa butter in an amount of from about 6 wt.-% to about 15 wt.-% based on the total weight of the sugar-reduced dark chocolate composition. According to another preferred embodiment of the present disclosure, the sugar-reduced dark chocolate composition comprises cocoa butter in an amount of from about 7 wt.-% to about 13 wt.-% based on the total weight of the sugar-reduced dark chocolate composition. According to another preferred embodiment of the present disclosure, the sugar-reduced dark chocolate composition comprises cocoa butter in an amount of from about 8 wt.-% to about 12 wt.-% based on the total weight of the sugar-reduced dark chocolate composition.

According to another preferred embodiment of the present disclosure, the sugar-reduced dark chocolate composition comprises cocoa butter in an amount of about 25 wt.-% or less based on the total weight of the sugar-reduced dark chocolate composition. According to another preferred embodiment of the present disclosure, the sugar-reduced dark chocolate composition comprises cocoa butter in an amount of about 20 wt.-% or less based on the total weight of the sugar-reduced dark chocolate composition. According to another preferred embodiment of the present disclosure, the sugar-reduced dark chocolate composition comprises cocoa butter in an amount of about 17 wt.-% or less based on the total weight of the sugar-reduced dark chocolate composition. According to another preferred embodiment of the present disclosure, the sugar-reduced dark chocolate composition comprises cocoa butter in an amount of about 15 wt.-% or less based on the total weight of the sugar-reduced dark chocolate composition. According to another preferred embodiment of the present disclosure, the sugar-reduced dark chocolate composition comprises cocoa butter in an amount of about 14 wt.-% or less based on the total weight of the sugar-reduced dark chocolate composition. According to another preferred embodiment of the present disclosure, the sugar-reduced dark chocolate composition comprises cocoa butter in an amount of about 13 wt.-% or less based on the total weight of the sugar-reduced dark chocolate composition. According to another preferred embodiment of the present disclosure, the sugar-reduced dark chocolate composition comprises cocoa butter in an amount of about 12 wt.-% or less based on the total weight of the sugar-reduced dark chocolate composition.

According to another preferred embodiment of the present disclosure, the sugar-reduced dark chocolate composition comprises allulose in an amount of about 40 wt.-% or less based on the total weight of the sugar-reduced dark chocolate composition. According to another preferred embodiment of the present disclosure, the sugar-reduced dark chocolate composition comprises allulose in an amount of about 35 wt.-% or less based on the total weight of the sugar-reduced dark chocolate composition. According to another preferred embodiment of the present disclosure, the sugar-reduced dark chocolate composition comprises allulose in an amount of about 33 wt.-% or less based on the total weight of the sugar-reduced dark chocolate composition. According to another preferred embodiment of the present disclosure, the sugar-reduced dark chocolate composition comprises allulose in an amount of about 30 wt.-% or less based on the total weight of the sugar-reduced dark chocolate composition. According to another preferred embodiment of the present disclosure, the sugar-reduced dark chocolate composition comprises allulose in an amount of about 28 wt.-% or less based on the total weight of the sugar-reduced dark chocolate composition. According to another preferred embodiment of the present disclosure, the sugar-reduced dark chocolate composition comprises allulose in an amount of about 26 wt.-% or less based on the total weight of the sugar-reduced dark chocolate composition. According to another preferred embodiment of the present disclosure, the sugar-reduced dark chocolate composition comprises allulose in an amount of about 24 wt.-% or less based on the total weight of the sugar-reduced dark chocolate composition.

According to another preferred embodiment of the present disclosure, the sugar-reduced dark chocolate composition comprises allulose in an amount of about 10 wt.-% or more based on the total weight of the sugar-reduced dark chocolate composition. According to another preferred embodiment of the present disclosure, the sugar-reduced dark chocolate composition comprises allulose in an amount of about 13 wt.-% or more based on the total weight of the sugar-reduced dark chocolate composition. According to another preferred embodiment of the present disclosure, the sugar-reduced dark chocolate composition comprises allulose in an amount of about 16 wt.-% or more based on the total weight of the sugar-reduced dark chocolate composition. According to another preferred embodiment of the present disclosure, the sugar-reduced dark chocolate composition comprises allulose in an amount of about 18 wt.-% or more based on the total weight of the sugar-reduced dark chocolate composition. According to another preferred embodiment of the present disclosure, the sugar-reduced dark chocolate composition comprises allulose in an amount of about 19 wt.-% or more based on the total weight of the sugar-reduced dark chocolate composition. According to another preferred embodiment of the present disclosure, the sugar-reduced dark chocolate composition comprises allulose in an amount of about 20 wt.-% or more based on the total weight of the sugar-reduced dark chocolate composition.

According to another preferred embodiment of the present disclosure, the sugar-reduced dark chocolate composition comprises allulose in an amount of from about 10 wt.-% to about 40 wt.-% based on the total weight of the sugar-reduced dark chocolate composition. According to another preferred embodiment of the present disclosure, the sugar-reduced dark chocolate composition comprises allulose in an amount of from about 13 wt.-% to about 35 wt.-% based on the total weight of the sugar-reduced dark chocolate composition. According to another preferred embodiment of the present disclosure, the sugar-reduced dark chocolate composition comprises allulose in an amount of from about 16 wt.-% to about 33 wt.-% based on the total weight of the sugar-reduced dark chocolate composition. According to another preferred embodiment of the present disclosure, the sugar-reduced dark chocolate composition comprises allulose in an amount of from about 19 wt.-% to about 30 wt.-% based on the total weight of the sugar-reduced dark chocolate composition. According to another preferred embodiment of the present disclosure, the sugar-reduced dark chocolate composition comprises allulose in an amount of from about 20 wt.-% to about 28 wt.-% based on the total weight of the sugar-reduced dark chocolate composition. According to another preferred embodiment of the present disclosure, the sugar-reduced dark chocolate composition comprises allulose in an amount of from about 20 wt.-% to about 26 wt.-% based on the total weight of the sugar-reduced dark chocolate composition. According to another preferred embodiment of the present disclosure, the sugar-reduced dark chocolate composition comprises allulose in an amount of from about 20 wt.-% to about 24 wt.-% based on the total weight of the sugar-reduced dark chocolate composition.

According to a further preferred embodiment, the amount of the caloric sweetener comprised in the sugar-reduced dark chocolate composition is higher than the amount of allulose. In a preferred embodiment, the ratio of the amount of allulose and the amount of caloric sweetener applied is in the range of 1:1 to 1:50, preferably 1:1 to 1:35, more preferably 1:1 to 1:20, more preferably 1:1 to 1:15, more preferably 1:1 to 1:10, even more preferably 1:1 to 1:5, yet more preferably 1:1 to 1:3, yet more preferably 1:1 to 1:2, most preferably 1:1 to 1:1,5.

According to a further preferred embodiment of the present disclosure, the sugar-reduced dark chocolate composition comprises

    a) cocoa mass in an amount of from about 35 wt.-% to about 46 wt.%, and
    b) cocoa butter in an amount of from about 8 wt.-% to about 12 wt.%, and
    c) allulose in an amount of from about 20 wt.-% to about 24 wt.%, and
    d) a caloric sweetener in an amount of from about 22 wt.-% to about 26 wt.%,

each based on the total weight of the sugar-reduced dark chocolate composition.

Calorie-reduced dark chocolate composition

According to a preferred embodiment of the present disclosure, the dark chocolate composition is a calorie-reduced dark chocolate composition.

According to a preferred embodiment, the calorie-reduced dark chocolate comprises milk components in an amount of 5 wt.-% or less. According to a further preferred embodiment, the calorie-reduced dark chocolate comprises milk components in an amount of 2 wt.-% or less. According to a further preferred embodiment, the calorie-reduced dark chocolate comprises milk components in an amount of 1 wt.-% or less. According to a further preferred embodiment, the calorie-reduced dark chocolate comprises milk components in an amount of 0.5 wt.-% or less. According to an even further preferred embodiment, the calorie-reduced dark chocolate does not contain milk components.

According to a further preferred embodiment of the present disclosure, the calorie-reduced dark chocolate composition has a calorie content of about 430 kcal per 100 g of the calorie-reduced dark chocolate composition or less. According to another preferred embodiment of the present disclosure, the calorie-reduced dark chocolate composition has a calorie content of about 410 kcal per 100 g of the calorie-reduced dark chocolate composition or less. According to another preferred embodiment of the present disclosure, the calorie-reduced dark chocolate composition has a calorie content of about 400 kcal per 100 g of the calorie-reduced dark chocolate composition or less. According to another preferred embodiment of the present disclosure, the calorie-reduced dark chocolate composition has a calorie content of about 380 kcal per 100 g of the calorie-reduced dark chocolate composition or less.

According to another preferred embodiment of the present disclosure, the calorie-reduced dark chocolate composition comprises the caloric sweetener in an amount of about 5 wt.-% or less based on the total weight of the calorie-reduced dark chocolate composition. According to another preferred embodiment of the present disclosure, the calorie-reduced dark chocolate composition comprises the caloric sweetener in an amount of about 3 wt.-% or less based on the total weight of the calorie-reduced dark chocolate composition. According to another preferred embodiment of the present disclosure, the calorie-reduced dark chocolate composition comprises the caloric sweetener in an amount of about 2 wt.-% or less based on the total weight of the calorie-reduced dark chocolate composition. According to another preferred embodiment of the present disclosure, the calorie-reduced dark chocolate composition comprises the caloric sweetener in an amount of about 1 wt.-% or less based on the total weight of the calorie-reduced dark chocolate composition. According to a further preferred embodiment of the present disclosure, the calorie-reduced dark chocolate composition comprises the caloric sweetener in an amount of about 0.5 wt.-% or less based on the total weight of the calorie-reduced dark chocolate composition.

According to another preferred embodiment of the present disclosure, the calorie-reduced dark chocolate composition comprises cocoa mass in an amount of from about 20 wt.-% to about 95 wt.-% based on the total weight of the calorie-reduced dark chocolate composition. According to another preferred embodiment of the present disclosure, the calorie-reduced dark chocolate composition comprises cocoa mass in an amount of from about 20 wt.-% to about 80 wt.-% based on the total weight of the calorie-reduced dark chocolate composition. According to another preferred embodiment of the present disclosure, the calorie-reduced dark chocolate composition comprises cocoa mass in an amount of from about 20 wt.-% to about 75 wt.-% based on the total weight of the calorie-reduced dark chocolate composition. According to another preferred embodiment of the present disclosure, the calorie-reduced dark chocolate composition comprises cocoa mass in an amount of from about 30 wt.-% to about 70 wt.-% based on the total weight of the calorie-reduced dark chocolate composition. According to another preferred embodiment of the present disclosure, the calorie-reduced dark chocolate composition comprises cocoa mass in an amount of from about 35 wt.-% to about 60 wt.-% based on the total weight of the calorie-reduced dark chocolate composition. According to another preferred embodiment of the present disclosure, the calorie-reduced dark chocolate composition comprises cocoa mass in an amount of from about 35 wt.-% to about 55 wt.-% based on the total weight of the calorie-reduced dark chocolate composition. According to another preferred embodiment of the present disclosure, the calorie-reduced dark chocolate composition comprises cocoa mass in an amount of from about 37 wt.-% to about 53 wt.-% based on the total weight of the calorie-reduced dark chocolate composition. According to another preferred embodiment of the present disclosure, the calorie-reduced dark chocolate composition comprises cocoa mass in an amount of from about 39 wt.-% to about 51 wt.-% based on the total weight of the calorie-reduced dark chocolate composition. According to another preferred embodiment of the present disclosure, the calorie-reduced dark chocolate composition comprises cocoa mass in an amount of from about 40 wt.-% to about 50 wt.-% based on the total weight of the calorie-reduced dark chocolate composition. According to another preferred embodiment of the present disclosure, the calorie-reduced dark chocolate composition comprises cocoa mass in an amount of from about 41 wt.-% to about 48 wt.-% based on the total weight of the calorie-reduced dark chocolate composition. According to another preferred embodiment of the present disclosure, the calorie-reduced dark chocolate composition comprises cocoa mass in an amount of from about 42 wt.-% to about 46 wt.-% based on the total weight of the calorie-reduced dark chocolate composition.

According to another preferred embodiment of the present disclosure, the calorie-reduced dark chocolate composition comprises cocoa butter in an amount of from about 0 wt.-% to about 20 wt.-% based on the total weight of the calorie-reduced dark chocolate composition. According to another preferred embodiment of the present disclosure, the calorie-reduced dark chocolate composition comprises cocoa butter in an amount of from about 2 wt.-% to about 15 wt.-% based on the total weight of the calorie-reduced dark chocolate composition. According to another preferred embodiment of the present disclosure, the calorie-reduced dark chocolate composition comprises cocoa butter in an amount of from about 3 wt.-% to about 10 wt.-% based on the total weight of the calorie-reduced dark chocolate composition. According to another preferred embodiment of the present disclosure, the calorie-reduced dark chocolate composition comprises cocoa butter in an amount of from about 3 wt.-% to about 9 wt.-% based on the total weight of the calorie-reduced dark chocolate composition. According to another preferred embodiment of the present disclosure, the calorie-reduced dark chocolate composition comprises cocoa butter in an amount of from about 3 wt.-% to about 8 wt.-% based on the total weight of the calorie-reduced dark chocolate composition. According to another preferred embodiment of the present disclosure, the calorie-reduced dark chocolate composition comprises cocoa butter in an amount of from about 4 wt.-% to about 8 wt.-% based on the total weight of the calorie-reduced dark chocolate composition.

According to another preferred embodiment of the present disclosure, the calorie-reduced dark chocolate composition comprises cocoa butter in an amount of about 20 wt.-% or less based on the total weight of the calorie-reduced dark chocolate composition. According to another preferred embodiment of the present disclosure, the calorie-reduced dark chocolate composition comprises cocoa butter in an amount of about 15 wt.-% or less based on the total weight of the calorie-reduced dark chocolate composition. According to another preferred embodiment of the present disclosure, the calorie-reduced dark chocolate composition comprises cocoa butter in an amount of about 10 wt.-% or less based on the total weight of the calorie-reduced dark chocolate composition. According to another preferred embodiment of the present disclosure, the calorie-reduced dark chocolate composition comprises cocoa butter in an amount of about 9 wt.-% or less based on the total weight of the calorie-reduced dark chocolate composition. According to another preferred embodiment of the present disclosure, the calorie-reduced dark chocolate composition comprises cocoa butter in an amount of about 8 wt.-% or less based on the total weight of the calorie-reduced dark chocolate composition.

According to another preferred embodiment of the present disclosure, the calorie-reduced dark chocolate composition comprises allulose in an amount of about 60 wt.-% or less based on the total weight of the calorie-reduced dark chocolate composition. According to another preferred embodiment of the present disclosure, the calorie-reduced dark chocolate composition comprises allulose in an amount of about 55 wt.-% or less based on the total weight of the calorie-reduced dark chocolate composition. According to another preferred embodiment of the present disclosure, the calorie-reduced dark chocolate composition comprises allulose in an amount of about 50 wt.-% or less based on the total weight of the calorie-reduced dark chocolate composition. According to another preferred embodiment of the present disclosure, the calorie-reduced dark chocolate composition comprises allulose in an amount of about 45 wt.-% or less based on the total weight of the calorie-reduced dark chocolate composition. According to another preferred embodiment of the present disclosure, the calorie-reduced dark chocolate composition comprises allulose in an amount of about 42 wt.-% or less based on the total weight of the calorie-reduced dark chocolate composition. According to another preferred embodiment of the present disclosure, the calorie-reduced dark chocolate composition comprises allulose in an amount of about 39 wt.-% or less based on the total weight of the calorie-reduced dark chocolate composition. According to another preferred embodiment of the present disclosure, the calorie-reduced dark chocolate composition comprises allulose in an amount of about 37 wt.-% or less based on the total weight of the calorie-reduced dark chocolate composition.

According to another preferred embodiment of the present disclosure, the calorie-reduced dark chocolate composition comprises allulose in an amount of about 15 wt.-% or more based on the total weight of the calorie-reduced dark chocolate composition. According to another preferred embodiment of the present disclosure, the calorie-reduced dark chocolate composition comprises allulose in an amount of about 20 wt.-% or more based on the total weight of the calorie-reduced dark chocolate composition. According to another preferred embodiment of the present disclosure, the calorie-reduced dark chocolate composition comprises allulose in an amount of about 25 wt.-% or more based on the total weight of the calorie-reduced dark chocolate composition. According to another preferred embodiment of the present disclosure, the calorie-reduced dark chocolate composition comprises allulose in an amount of about 27 wt.-% or more based on the total weight of the calorie-reduced dark chocolate composition. According to another preferred embodiment of the present disclosure, the calorie-reduced dark chocolate composition comprises allulose in an amount of about 30 wt.-% or more based on the total weight of the calorie-reduced dark chocolate composition. According to another preferred embodiment of the present disclosure, the calorie-reduced dark chocolate composition comprises allulose in an amount of about 33 wt.-% or more based on the total weight of the calorie-reduced dark chocolate composition.

According to another preferred embodiment of the present disclosure, the calorie-reduced dark chocolate composition comprises allulose in an amount of from about 15 wt.-% to about 60 wt.-% based on the total weight of the calorie-reduced dark chocolate composition. According to another preferred embodiment of the present disclosure, the calorie-reduced dark chocolate composition comprises allulose in an amount of from about 20 wt.-% to about 55 wt.-% based on the total weight of the calorie-reduced dark chocolate composition. According to another preferred embodiment of the present disclosure, the calorie-reduced dark chocolate composition comprises allulose in an amount of from about 25 wt.-% to about 50 wt.-% based on the total weight of the calorie-reduced dark chocolate composition. According to another preferred embodiment of the present disclosure, the calorie-reduced dark chocolate composition comprises allulose in an amount of from about 27 wt.-% to about 45 wt.-% based on the total weight of the calorie-reduced dark chocolate composition. According to another preferred embodiment of the present disclosure, the calorie-reduced dark chocolate composition comprises allulose in an amount of from about 30 wt.-% to about 42 wt.-% based on the total weight of the calorie-reduced dark chocolate composition. According to another preferred embodiment of the present disclosure, the calorie-reduced dark chocolate composition comprises allulose in an amount of from about 33 wt.-% to about 39 wt.-% based on the total weight of the calorie-reduced dark chocolate composition. According to a further preferred embodiment of the present disclosure, the calorie-reduced dark chocolate composition comprises allulose in an amount of from about 33 wt.-% to about 37 wt.-% based on the total weight of the calorie-reduced dark chocolate composition.

According to a further preferred embodiment of the present disclosure, the calorie-reduced dark chocolate composition comprises

    a) cocoa mass in an amount of from about 42 wt.-% to about 46 wt.%, and
    b) cocoa butter in an amount of from about 4 wt.-% to about 8 wt.%, and

c) allulose in an amount of from about 33 wt.-% to about 37 wt.%, and

d) a caloric sweetener in an amount of from about 0 wt.-% to about 1 wt.%,

each based on the total weight of the calorie-reduced dark chocolate composition.

White chocolate composition

According to one embodiment of the present disclosure, the chocolate composition is a white chocolate composition. It is understood that a white chocolate composition does not contain cocoa mass or cocoa powder. In other words, at least one ingredient from a cocoa bean comprised in the white chocolate composition according to the present disclosure is cocoa butter.

According to a preferred embodiment of the present disclosure, the white chocolate composition has a calorie content of about 570 kcal per 100 g of the white chocolate composition or less. According to another preferred embodiment of the present disclosure, the white chocolate composition has a calorie content of about 550 kcal per 100 g of the white chocolate composition or less. According to another preferred embodiment of the present disclosure, the white chocolate composition has a calorie content of about 500 kcal per 100 g of the white chocolate composition or less. According to another preferred embodiment of the present disclosure, the white chocolate composition has a calorie content of about 450 kcal per 100 g of the white chocolate composition or less.

Sugar-reduced white chocolate composition

According to a preferred embodiment of the present disclosure, the white chocolate composition is a sugar-reduced white chocolate composition.

According to a further preferred embodiment of the present disclosure, the sugar-reduced white chocolate composition has a calorie content in the range of from about 300 to about 580 kcal per 100 g of the sugar-reduced white chocolate composition. According to another preferred embodiment of the present disclosure, the sugar-reduced white chocolate composition has a calorie content in the range of from about 350 to about 560 kcal per 100 g of the sugar-reduced white chocolate composition. According to another preferred embodiment of the present disclosure, the sugar-reduced white chocolate composition has a calorie content in the range of from about 380 to about 530 kcal per 100 g of the sugar-reduced white chocolate composition. According to another preferred embodiment of the present disclosure, the sugar-reduced white chocolate composition has a calorie content in the range of from about 400 to about 500 kcal per 100 g of the sugar-reduced white chocolate composition.

According to another preferred embodiment of the present disclosure, the sugar-reduced white chocolate composition comprises the caloric sweetener in an amount of about 35 wt.-% or less based on the total weight of the sugar-reduced white chocolate composition. According to another preferred embodiment of the present disclosure, the sugar-reduced white chocolate composition comprises the caloric sweetener in an amount of about 30 wt.-% or less based on the total weight of the sugar-reduced white chocolate composition. According to another preferred embodiment of the present disclosure, the sugar-reduced white chocolate composition comprises the caloric sweetener in an amount of about 25 wt.-% or less based on the total weight of the sugar-reduced white chocolate composition.

According to another preferred embodiment of the present disclosure, the sugar-reduced white chocolate composition comprises the caloric sweetener in an amount of from about 10 wt.-% to about 35 wt.-% based on the total weight of the sugar-reduced white chocolate composition. According to another preferred embodiment of the present disclosure, the sugar-reduced white chocolate composition comprises the caloric sweetener in an amount of from about 15 wt.-% to about 30 wt.-% based on the total weight of the sugar-reduced white chocolate composition. According to another preferred embodiment of the present disclosure, the sugar-reduced white chocolate composition comprises the caloric sweetener in an amount of from about 17 wt.-% to about 27 wt.-% based on the total weight of the sugar-reduced white chocolate composition. According to another preferred embodiment of the present disclosure, the sugar-reduced white chocolate composition comprises the caloric sweetener in an amount of from about 18 wt.-% to about 22 wt.-% based on the total weight of the sugar-reduced white chocolate composition.

According to another preferred embodiment of the present disclosure, the sugar-reduced white chocolate composition comprises cocoa butter in an amount of from about 15 wt.-% to about 40 wt.-% based on the total weight of the sugar-reduced white chocolate composition. According to another preferred embodiment of the present disclosure, the sugar-reduced white chocolate composition comprises cocoa butter in an amount of from about 20 wt.-% to about 35 wt.-% based on the total weight of the sugar-reduced white chocolate composition. According to another preferred embodiment of the present disclosure, the sugar-reduced white chocolate composition comprises cocoa butter in an amount of from about 22 wt.-% to about 34 wt.-% based on the total weight of the sugar-reduced white chocolate composition. According to another preferred embodiment of the present disclosure, the sugar-reduced white chocolate composition comprises cocoa butter in an amount of from about 24 wt.-% to about 33 wt.-% based on the total weight of the sugar-reduced white chocolate composition. According to another preferred embodiment of the present disclosure, the sugar-reduced white chocolate composition comprises cocoa butter in an amount of from about 25 wt.-% to about 33 wt.-% based on the total weight of the sugar-reduced white chocolate composition. According to another preferred embodiment of the present disclosure, the sugar-reduced white chocolate composition comprises cocoa butter in an amount of from about 28 wt.-% to about 32 wt.-% based on the total weight of the sugar-reduced white chocolate composition.

According to another preferred embodiment of the present disclosure, the sugar-reduced white chocolate composition comprises allulose in an amount of about 40 wt.-% or less based on the total weight of the sugar-reduced white chocolate composition. According to another preferred embodiment of the present disclosure, the sugar-reduced white chocolate composition comprises allulose in an amount of about 35 wt.-% or less based on the total weight of the sugar-reduced white chocolate composition. According to another preferred embodiment of the present disclosure, the sugar-reduced white chocolate composition comprises allulose in an amount of about 33 wt.-% or less based on the total weight of the sugar-reduced white chocolate composition. According to another preferred embodiment of the present disclosure, the sugar-reduced white chocolate composition comprises allulose in an amount of about 32 wt.-% or less based on the total weight of the sugar-reduced white chocolate composition. According to another preferred embodiment of the present disclosure, the sugar-reduced white chocolate composition comprises allulose in an amount of about 30 wt.-% or less based on the total weight of the sugar-reduced white chocolate composition. According to another preferred embodiment of the present disclosure, the sugar-reduced white chocolate composition comprises allulose in an amount of about 28 wt.-% or less based on the total weight of the sugar-reduced white chocolate composition. According to another preferred embodiment of the present disclosure, the sugar-reduced white chocolate composition comprises allulose in an amount of about 26 wt.-% or less based on the total weight of the sugar-reduced white chocolate composition.

According to another preferred embodiment of the present disclosure, the sugar-reduced white chocolate composition comprises allulose in an amount of about 10 wt.-% or more based on the total weight of the sugar-reduced white chocolate composition. According to another preferred embodiment of the present disclosure, the sugar-reduced white chocolate composition comprises allulose in an amount of about 13 wt.-% or more based on the total weight of the sugar-reduced white chocolate composition. According to another preferred embodiment of the present disclosure, the sugar-reduced white chocolate composition comprises allulose in an amount of about 16 wt.-% or more based on the total weight of the sugar-reduced white chocolate composition. According to another preferred embodiment of the present disclosure, the sugar-reduced white chocolate composition comprises allulose in an amount of about 18 wt.-% or more based on the total weight of the sugar-reduced white chocolate composition. According to another preferred embodiment of the present disclosure, the sugar-reduced white chocolate composition comprises allulose in an amount of about 20 wt.-% or more based on the total weight of the sugar-reduced white chocolate composition. According to another preferred embodiment of the present disclosure, the sugar-reduced white chocolate composition comprises allulose in an amount of about 22 wt.-% or more based on the total weight of the sugar-reduced white chocolate composition.

According to another preferred embodiment of the present disclosure, the sugar-reduced white chocolate composition comprises allulose in an amount of from about 10 wt.-% to about 40 wt.-% based on the total weight of the sugar-reduced white chocolate composition. According to another preferred embodiment of the present disclosure, the sugar-reduced white chocolate composition comprises allulose in an amount of from about 13 wt.-% to about 35 wt.-% based on the total weight of the sugar-reduced white chocolate composition. According to another preferred embodiment of the present disclosure, the sugar-reduced white chocolate composition comprises allulose in an amount of from about 16 wt.-% to about 33 wt.-% based on the total weight of the sugar-reduced white chocolate composition. According to another preferred embodiment of the present disclosure, the sugar-reduced white chocolate composition comprises allulose in an amount of from about 18 wt.-% to about 30 wt.-% based on the total weight of the sugar-reduced white chocolate composition. According to another preferred embodiment of the present disclosure, the sugar-reduced white chocolate composition comprises allulose in an amount of from about 20 wt.-% to about 30 wt.-% based on the total weight of the sugar-reduced white chocolate composition. According to another preferred embodiment of the present disclosure, the sugar-reduced white chocolate composition comprises allulose in an amount of from about 20 wt.-% to about 28 wt.-% based on the total weight of the sugar-reduced white chocolate composition. According to another preferred embodiment of the present disclosure, the sugar-reduced white chocolate composition comprises allulose in an amount of from about 22 wt.-% to about 26 wt.-% based on the total weight of the sugar-reduced white chocolate composition.

According to a further preferred embodiment, the amount of the allulose comprised in the sugar-reduced white chocolate composition is lower than the amount of caloric sweetener. In a preferred embodiment, the ratio of the amount of caloric sweetener and the amount of allulose applied is in the range of 1:1 to 1:50, preferably 1:1 to 1:35, more preferably 1:1 to 1:20, more preferably 1:1 to 1:15, more preferably 1:1 to 1:10, even more preferably 1:1 to 1:5, yet more preferably 1:1 to 1:3, yet more preferably 1:1 to 1:2 most preferably 1:1 to 1:1.5.

According to a further preferred embodiment of the present disclosure, the sugar-reduced white chocolate composition comprises milk powder in an amount of about 35 wt.-% or less based on the total weight of the sugar-reduced white chocolate composition. According to another preferred embodiment of the present disclosure, the sugar-reduced white chocolate composition comprises milk powder in an amount of about 30 wt.-% or less based on the total weight of the sugar-reduced white chocolate composition. According to another preferred embodiment of the present disclosure, the sugar-reduced white chocolate composition comprises milk powder in an amount of about 28 wt.-% or less based on the total weight of the sugar-reduced white chocolate composition. According to another preferred embodiment of the present disclosure, the sugar-reduced white chocolate composition comprises milk powder in an amount of about 27 wt.-% or less based on the total weight of the sugar-reduced white chocolate composition.

According to a further preferred embodiment of the present disclosure, the sugar-reduced white chocolate composition comprises milk powder in an amount of from about 5 wt.-% to about 35 wt.-% based on the total weight of the sugar-reduced white chocolate composition. According to another preferred embodiment of the present disclosure, the sugar-reduced white chocolate composition comprises milk powder in an amount of from about 10 wt.-% to about 30 wt.-% based on the total weight of the sugar-reduced white chocolate composition. According to another preferred embodiment of the present disclosure, the sugar-reduced white chocolate composition comprises milk powder in an amount of from about 15 wt.-% to about 29 wt.-% based on the total weight of the sugar-reduced white chocolate composition. According to another preferred embodiment of the present disclosure, the sugar-reduced white chocolate composition comprises milk powder in an amount of from about 20 wt.-% to about 28 wt.-% based on the total weight of the sugar-reduced white chocolate composition. According to another preferred embodiment of the present disclosure, the sugar-reduced white chocolate composition comprises milk powder in an amount of from about 22 wt.-% to about 26 wt.-% based on the total weight of the sugar-reduced white chocolate composition. According to another preferred embodiment of the present disclosure, the sugar-reduced white chocolate composition comprises milk powder in an amount of from about 23 wt.-% to about 27 wt.-% based on the total weight of the sugar-reduced white chocolate composition.

According to a further preferred embodiment of the present disclosure, the sugar-reduced white chocolate composition comprises

a) cocoa butter in an amount of from about 28 wt.-% to about 32 wt.-%, and
b) a caloric sweetener in an amount of from about 19 wt.-% to about 23 wt.-%, and
c) allulose in an amount of from about 22 wt.-% to about 26 wt.-%, and
d) milk powder in an amount of from about 23 wt.-% to about 27 wt.-%,

each based on the total weight of the sugar-reduced white chocolate composition.

Calorie-reduced white chocolate composition

According to a preferred embodiment of the present disclosure, the white chocolate composition is a calorie-reduced white chocolate composition.

According to a further preferred embodiment of the present disclosure, the calorie-reduced white chocolate composition has a calorie content in the range of from about 300 to about 465 kcal per 100 g of the calorie-reduced white chocolate composition. According to another preferred embodiment of the present disclosure, the calorie-reduced white chocolate composition has a calorie content in the range of from about 350 to about 435 kcal per 100 g of the calorie-reduced white chocolate composition. According to another preferred embodiment of the present disclosure, the calorie-reduced white chocolate composition has a calorie content in the range of from about 380 to about 410 kcal per 100 g of the calorie-reduced white chocolate composition.

According to another preferred embodiment of the present disclosure, the calorie-reduced white chocolate composition comprises the caloric sweetener in an amount of about 5 wt.-% or less based on the total weight of the calorie-reduced white chocolate composition. According to another preferred embodiment of the present disclosure, the calorie-reduced white chocolate composition comprises the caloric sweetener in an amount of about 2 wt.-% or less based on the total weight of the calorie-reduced white chocolate composition. According to another preferred embodiment of the present disclosure, the calorie-reduced white chocolate composition comprises the caloric sweetener in an amount of about 1 wt.-% or less based on the total weight of the calorie-reduced white chocolate composition.

According to another preferred embodiment of the present disclosure, the calorie-reduced white chocolate composition comprises cocoa butter in an amount of from about 15 wt.-% to about 40 wt.-% based on the total weight of the calorie-reduced white chocolate composition. According to another preferred embodiment of the present disclosure, the calorie-reduced white chocolate composition comprises cocoa butter in an amount of from about 15 wt.-% to about 35 wt.-% based on the total weight of the calorie-reduced white chocolate composition. According to another preferred embodiment of the present disclosure, the calorie-reduced white chocolate composition comprises cocoa butter in an amount of from about 19 wt.-% to about 32 wt.-% based on the total weight of the calorie-reduced white chocolate composition. According to another preferred embodiment of the present disclosure, the calorie-reduced white chocolate composition comprises cocoa butter in an amount of from about 20 wt.-% to about 30 wt.-% based on the total weight of the calorie-reduced white chocolate composition. According to another preferred embodiment of the present disclosure, the calorie-reduced white chocolate composition comprises cocoa butter in an amount of from about 22 wt.-% to about 28 wt.-

% based on the total weight of the calorie-reduced white chocolate composition. According to another preferred embodiment of the present disclosure, the calorie-reduced white chocolate composition comprises cocoa butter in an amount of from about 23 wt.-% to about 27 wt.-% based on the total weight of the calorie-reduced white chocolate composition.

According to another preferred embodiment of the present disclosure, the calorie-reduced white chocolate composition comprises allulose in an amount of about 60 wt.-% or less based on the total weight of the calorie-reduced white chocolate composition. According to another preferred embodiment of the present disclosure, the calorie-reduced white chocolate composition comprises allulose in an amount of about 50 wt.-% or less based on the total weight of the calorie-reduced white chocolate composition. According to another preferred embodiment of the present disclosure, the calorie-reduced white chocolate composition comprises allulose in an amount of about 45 wt.-% or less based on the total weight of the calorie-reduced white chocolate composition. According to another preferred embodiment of the present disclosure, the calorie-reduced white chocolate composition comprises allulose in an amount of about 43 wt.-% or less based on the total weight of the calorie-reduced white chocolate composition. According to another preferred embodiment of the present disclosure, the calorie-reduced white chocolate composition comprises allulose in an amount of about 41 wt.-% or less based on the total weight of the calorie-reduced white chocolate composition. According to another preferred embodiment of the present disclosure, the calorie-reduced white chocolate composition comprises allulose in an amount of about 40 wt.-% or less based on the total weight of the calorie-reduced white chocolate composition. According to another preferred embodiment of the present disclosure, the calorie-reduced white chocolate composition comprises allulose in an amount of about 38 wt.-% or less based on the total weight of the calorie-reduced white chocolate composition. According to a further preferred embodiment of the present disclosure, the calorie-reduced white chocolate composition comprises allulose in an amount of about 37 wt.-% or less based on the total weight of the calorie-reduced white chocolate composition.

According to another preferred embodiment of the present disclosure, the calorie-reduced white chocolate composition comprises allulose in an amount of about 10 wt.-% or more based on the total weight of the calorie-reduced white chocolate composition. According to another preferred embodiment of the present disclosure, the calorie-reduced white chocolate composition comprises allulose in an amount of about 15 wt.-% or more based on the total weight of the calorie-reduced white chocolate composition. According to another preferred embodiment of the present disclosure, the calorie-reduced white chocolate composition comprises allulose in an amount of about 20 wt.-% or more based on the total weight of the calorie-reduced white chocolate composition. According to another preferred embodiment of the present disclosure, the calorie-reduced white chocolate composition comprises allulose in an amount of about 24 wt.-% or more based on the total weight of the calorie-reduced white chocolate composition. According to another preferred embodiment of the present disclosure, the calorie-reduced white chocolate composition comprises allulose in an amount of about 27 wt.-% or more based on the total weight of the calorie-reduced white chocolate composition. According to another preferred embodiment of the present disclosure, the calorie-reduced white chocolate composition comprises allulose in an amount of about 31 wt.-% or more based on the total weight of the calorie-reduced white chocolate composition. According to another preferred embodiment of the present disclosure, the calorie-reduced white chocolate composition comprises allulose in an amount of about 33 wt.-% or more based on the total weight of the calorie-reduced white chocolate composition.

According to another preferred embodiment of the present disclosure, the calorie-reduced white chocolate composition comprises allulose in an amount of from about 10 wt.-% to about 60 wt.-% based on the total weight of the calorie-reduced white chocolate composition. According to another preferred embodiment of the present disclosure, the calorie-reduced white chocolate composition comprises allulose in an amount of from about 15 wt.-% to about 50 wt.-% based on the total weight of the calorie-reduced white chocolate composition. According to another preferred embodiment of the present disclosure, the calorie-reduced white chocolate composition comprises allulose in an amount of from about 20 wt.-% to about 45 wt.-% based on the total weight of the calorie-reduced white chocolate composition. According to another preferred embodiment of the present disclosure, the calorie-reduced white chocolate composition comprises allulose in an amount of from about 24 wt.-% to about 43 wt.-% based on the total weight of the calorie-reduced white chocolate composition. According to another preferred embodiment of the present disclosure, the calorie-reduced white chocolate composition comprises allulose in an amount of from about 27 wt.-% to about 41 wt.-% based on the total weight of the calorie-reduced white chocolate composition. According to another preferred embodiment of the present disclosure, the calorie-reduced white chocolate composition comprises allulose in an amount of from about 30 wt.-% to about 40 wt.-% based on the total weight of the calorie-reduced white chocolate composition. According to another preferred embodiment of the present disclosure, the calorie-reduced white chocolate composition comprises allulose in an amount of from about 31 wt.-% to about 38 wt.-% based on the total weight of the calorie-reduced white chocolate composition. According to a further preferred embodiment of the present disclosure, the calorie-reduced white chocolate composition comprises allulose in an amount of from about 33 wt.-% to about 37 wt.-% based on the total weight of the calorie-reduced white chocolate composition.

According to a further preferred embodiment of the present disclosure, the calorie-reduced white chocolate composition comprises milk powder in an amount of about 40 wt.-% or less based on the total weight of the calorie-reduced white chocolate composition. According to another preferred embodiment of the present disclosure, the calorie-reduced white chocolate composition comprises milk powder in an amount of about 35 wt.-% or less based on the total weight of the calorie-reduced white chocolate composition. According to another preferred embodiment of the present disclosure, the calorie-reduced white chocolate composition comprises milk powder in an amount of about 30 wt.-% or less based on the total weight of the calorie-reduced white chocolate composition. According to another preferred embodiment of the present disclosure, the calorie-reduced white chocolate composition comprises milk powder in an amount of about 28 wt.-% or less based on the total weight of the calorie-reduced white chocolate composition. According to a further preferred embodiment of the present disclosure, the calorie-reduced white chocolate composition comprises milk powder in an amount of about 27 wt.-% or less based on the total weight of the calorie-reduced white chocolate composition.

According to a further preferred embodiment of the present disclosure, the calorie-reduced white chocolate composition comprises milk powder in an amount of from about 1 wt.-% to about 40 wt.-% based on the total weight of the calorie-reduced white chocolate composition. According to another preferred embodiment of the present disclosure, the calorie-reduced white chocolate composition comprises milk powder in an amount of from about 5 wt.-% to about 35 wt.-% based on the total weight of the calorie-reduced white chocolate composition. According to another preferred embodiment of the present disclosure, the calorie-reduced white chocolate composition comprises milk powder in an amount of from about 10 wt.-% to about 30 wt.-% based on the total weight of the calorie-reduced white chocolate composition. According to another preferred embodiment of the present disclosure, the calorie-reduced white chocolate composition comprises milk powder in an amount of from about 15 wt.-% to about 30 wt.-% based on the total weight of the calorie-reduced white chocolate composition. According to another preferred embodiment of the present disclosure, the calorie-reduced white chocolate composition comprises milk powder in an amount of from about 20 wt.-% to about 28 wt.-% based on the total weight of the calorie-reduced white chocolate composition. According to another preferred embodiment of the present disclosure, the calorie-reduced white chocolate composition comprises milk powder in an amount of from about 23 wt.-% to about 27 wt.-% based on the total weight of the calorie-reduced white chocolate composition.

According to a further preferred embodiment of the present disclosure, the calorie-reduced white chocolate composition comprises

    a) cocoa butter in an amount of from about 23 wt.-% to about 27 wt.%, and
    b) a caloric sweetener in an amount of from about 0 wt.-% to about 1 wt.%, and
    c) allulose in an amount of from about 33 wt.-% to about 37 wt.%, and
    d) milk powder in an amount of from about 23 wt.-% to about 27 wt.%,

each based on the total weight of the calorie-reduced white chocolate composition.

## The method of manufacturing

In a further aspect, the present disclosure relates to a method of manufacturing a chocolate composition, the method comprising the steps of

    a) providing at least one ingredient from a cocoa bean selected from the group consisting of cocoa mass, cocoa powder, and cocoa butter, and allulose; and
    b) mixing the components from step a) to provide a composition I; and
    c) conching the composition I to yield a chocolate composition according to the present disclosure.

According to a preferred embodiment of the present disclosure, step a) further comprises providing at least one of milk powder, a bulking agent, a caloric sweetener, an emulsifier, and/or a flavoring agent. According to another preferred embodiment of the present disclosure, step a) further comprises providing milk powder. According to another preferred embodiment of the present disclosure, step a) further comprises providing a bulking agent. According to another preferred embodiment of the present disclosure, step a) further comprises providing a caloric sweetener. According to another preferred embodiment of the present disclosure, step a) further comprises providing an emulsifier. According to another preferred embodiment of the present disclosure, step a) further comprises providing a flavoring agent.

According to a preferred embodiment of the present disclosure, step c) is carried out at a temperature of less than 45 °C. According to another preferred embodiment of the present disclosure, step c) is carried out at a temperature of about 44 °C or less. According to another preferred embodiment of the present disclosure, step c) is carried out at a temperature of about 43 °C or less. According to another preferred embodiment of the present disclosure, step c) is carried out at a temperature of about 42 °C or less. According to another preferred embodiment of the present disclosure, step c) is carried out at a temperature of about 41.5 °C or less. According to another preferred embodiment of the present disclosure, step c) is carried out at a temperature of about 41 °C or less. According to another preferred embodiment of the present disclosure, step c) is carried out at a temperature of about 40 °C or less. As is shown in examples 2 and 3 of the present disclosure, a conching temperature below 45 °C reduces the cooling effect that is observed for chocolates containing allulose.

According to a preferred embodiment of the present disclosure, step c) is carried out at a temperature in the range of from about 35 °C to less than 45 °C. According to another preferred embodiment of the present disclosure, step c) is carried out at a temperature in the range of from about 36 °C to about 44 °C. According to another preferred embodiment of the present disclosure, step c) is carried out at a temperature in the range of from about 37 °C to about 43 °C. According to another preferred embodiment of the present disclosure, step c) is carried out at a temperature in the range of from about 38 °C to about 42 °C. According to another preferred embodiment of the present disclosure, step c) is carried out at a temperature in the range of from about 38.5 °C to about 41.5 °C. According to another preferred embodiment of the present disclosure, step c) is carried out at a temperature in the range of from about 39 °C to about 41 °C.

According to a preferred embodiment of the present disclosure, step c) is carried out for a duration of about 10 h or less. According to another preferred embodiment of the present disclosure, step c) is carried out for a duration of about 8 h or less. According to another preferred embodiment of the present disclosure, step c) is carried out for a duration of about 7 h or less. According to another preferred embodiment of the present disclosure, step c) is carried out for a duration of about 6 h or less. According to another preferred embodiment of the present disclosure, step c) is carried out for a duration of about 5 h or less.

According to a preferred embodiment of the present disclosure, step c) is carried out for a duration of from about 1 h to about 10 h. According to another preferred embodiment of the present disclosure, step c) is carried out for a duration of from about 2 h to about 8 h. According to another preferred embodiment of the present disclosure, step c) is carried out for a duration of from about 2 h to about 7 h. According to another preferred embodiment of the present disclosure, step c) is carried out for a duration of about from about 3 h to 6 h. According to another preferred embodiment of the present disclosure, step c) is carried out for a duration of about from about 4 h to 6 h.

As is shown in examples 2 and 3 of the present disclosure, a conching time of 10 h or less reduces the cooling effect that is observed for chocolates containing allulose.

According to a preferred embodiment of the present disclosure, the composition I comprises cocoa butter in an amount of from about 5 wt.-% to about 30 wt.-% based on the total weight of composition I. According to another preferred embodiment of the present disclosure, the composition I comprises cocoa butter in an amount of from 5 wt.-% to about 25 wt.-% based on the total weight composition I. According to another preferred embodiment of the present disclosure, the composition I comprises cocoa butter in an amount of from 8 wt.-% to about 22 wt.-% based on the total weight of composition I. According to another preferred embodiment of the present disclosure, the composition I comprises cocoa butter in an amount of from 10 wt.-% to about 20 wt.-% based on the total weight of composition I. According to another preferred embodiment of the present disclosure, the composition I comprises cocoa butter in an amount of from 12 wt.-% to about 16 wt.-% based on the total weight of composition I.

According to a preferred embodiment of the present disclosure, step c) comprises adding cocoa butter in an amount of from about 1 wt.-% to about 15 wt.-% based on the total weight of the chocolate composition. According to another preferred embodiment of the present disclosure, step c) comprises adding cocoa butter in an amount of from about 2 wt.-% to about 12 wt.-% based on the total weight of the chocolate composition. According to another preferred embodiment of the present disclosure, step c) comprises adding cocoa butter in an amount more preferably of from about 3 wt.-% to about 10 wt.-% based on the total weight of the chocolate composition. According to another preferred embodiment of the present disclosure, step c) comprises adding cocoa butter in an amount of from about 4 wt.-% to about 8 wt.-% based on the total weight of the chocolate composition.

According to a preferred embodiment of the present disclosure, the composition I comprises an emulsifier in an amount of about 2 wt.-% or less based on the total weight of composition I. According to another preferred embodiment of the present disclosure, the composition I comprises an emulsifier in an amount of 1.5 wt.-% or less based on the total weight of composition I. According to another preferred embodiment of the present disclosure, the composition I comprises an emulsifier in an amount of 1 wt.-% or less based on the total weight of composition I. According to another preferred embodiment of the present disclosure, the composition I comprises an emulsifier in an amount of 0.75 wt.-% or less based on the total weight of composition I. According to another preferred embodiment of the present disclosure, the composition I comprises an emulsifier in an amount of 0.5 wt.-% or less based on the total weight of composition I.

According to a preferred embodiment of the present disclosure, step c) comprises adding emulsifier in an amount of about 5 wt.-% or less based on the total weight of the chocolate composition. According to another preferred embodiment of the present disclosure, step c) comprises adding emulsifier in an amount of about 3 wt.-% or less based on the total weight of the chocolate composition. According to another preferred embodiment of the present disclosure, step c) comprises adding emulsifier in an amount of about 2 wt.-% or less based on the total weight of the chocolate composition. According to another preferred embodiment of the present disclosure, step c) comprises adding emulsifier in an amount of about 1 wt.-% or less based on the total weight of the chocolate composition. According to another preferred embodiment of the present disclosure, step c) comprises adding emulsifier in an amount of about 0.75 wt.-% or less based on the total weight of the chocolate composition.

Chocolate composition produced by method of the disclosure

In a further aspect, the present disclosure relates to a chocolate composition produced by the method according to the present disclosure. The chocolate composition of the invention may be any chocolate composition mentioned above, be it a sugar-reduced chocolate composition or a calorie-reduced chocolate composition.

According to a preferred embodiment of the present disclosure, the chocolate composition according to the present disclosure is produced by conching at a temperature of less than 45 °C and for a duration of from about 3 h to 6 h. According to a preferred embodiment of the present disclosure, the chocolate composition according to the present disclosure is produced by conching at a temperature in the range of from about 38 °C to about 42 °C and for a duration of from about 3 h to 6 h. According to another preferred embodiment of the present disclosure, the chocolate composition according to the present disclosure is produced by conching at a temperature in the range of from about 38.5 °C to about 41.5 °C and for a duration of from about 3 h to 6 h. According to another preferred embodiment of the present disclosure, the chocolate composition according to the present disclosure is produced by conching at a temperature in the range of from about 39 °C to about 41 °C and for a duration of about from about 4 h to 6 h.

Confectionary product

In yet a further aspect, the present disclosure relates to a confectionary product comprising a chocolate composition according to the present disclosure.

According to a preferred embodiment of the present disclosure, the confectionary product is a chocolate product or chocolate substitute product according to the requirements of the German Regulation on Cocoa and Chocolate Products of 15 December 2003 (KakaoV 2003).

According to a preferred embodiment of the present disclosure, the confectionary product is a chocolate product selected from the group consisting of milk chocolate, dark chocolate, white chocolate and vegan chocolate.

According to a preferred embodiment of the present disclosure, the confectionary product is a dark chocolate. It is understood that the dark chocolate comprises, preferably consists of, the dark chocolate composition as defined herein. According to another preferred embodiment of the present disclosure, the dark chocolate is a sugar-reduced dark chocolate. It is understood that the sugar-reduced dark chocolate comprises, preferably consists of, the sugar-reduced dark chocolate composition as defined herein. According to another preferred embodiment of the present disclosure, the dark chocolate is a calorie-reduced dark chocolate. It is understood that the calorie-reduced dark chocolate comprises, preferably consists of, the calorie-reduced dark chocolate composition as defined herein

According to a preferred embodiment of the present disclosure, the confectionary product is a milk chocolate. It is understood that the milk chocolate comprises, preferably consists of, a chocolate composition, preferably a milk chocolate composition as defined herein.

According to a preferred embodiment of the present disclosure, the confectionary product is a sugar-reduced milk chocolate. It is understood that the sugar-reduced milk chocolate comprises, preferably consists of, a sugar-reduced milk chocolate composition as defined herein. According to a preferred embodiment of the present disclosure, the confectionary product is a calorie-reduced milk chocolate. It is understood that the calorie-reduced milk chocolate comprises, preferably consists of, a calorie-reduced milk chocolate composition as defined herein.

According to a preferred embodiment of the present disclosure, the confectionary product is a white chocolate. It is understood that the white chocolate comprises or consists of a white chocolate composition as defined herein. According to a further preferred embodiment of the present disclosure, the white chocolate is a sugar-reduced white chocolate. It is understood that the sugar-reduced white chocolate comprises or consists of a sugar-reduced white chocolate composition as defined herein. According to another preferred embodiment of the present disclosure, the white chocolate is a calorie-reduced white chocolate. It is understood that the calorie-reduced white chocolate comprises or consists of a calorie-reduced white chocolate composition as defined herein.

According to another preferred embodiment of the present disclosure, the confectionary product is a core-shell type confectionary product. Such core-shell type product comprises at least two portions, i.e. a core, and a shell covering the entire surface of the core. In that, the core may be a fat-based filling or a water-based filling, such as caramel, and the shell comprises, preferably consists of, a chocolate composition as defined herein.

According to another preferred embodiment of the present disclosure, the confectionary product is a spread.

Definitions

As used herein, the term "cocoa mass" is defined as the mass produced from cocoa beans by fermenting, drying, separating the beans from their skins, roasting, and grinding the cocoa beans to yield the cocoa mass. Cocoa mass is available from different commercial suppliers or may be prepared by common methods. In the preferred sense of the present disclosure, the cocoa mass has a content of fat of about 53 wt.-% based on the total weight of the cocoa mass with the remainder being carbohydrates, proteins, tannins, and theobromine.

As used herein, the term "cocoa butter" is defined as the edible fat extracted from the cocoa beans. In the sense of the present disclosure, cocoa butter is prepared by fermenting, drying, roasting, separating the beans from their skins, and grinding the cocoa beans to yield cocoa mass. Said cocoa mass is then pressed to separate the cocoa butter from the non-fat cocoa solids. Optionally, the cocoa butter may be deodorized to remove strong or undesirable tastes. Cocoa butter contains an amount of 100 wt.-% of fat based on the total weight of the cocoa butter. In other words, cocoa butter consists of fat. Cocoa butter contains a high proportion of saturated fatty acids as well as monounsaturated oleic acid, which typically occur in the form of triglycerides.

As used herein, the term "cocoa powder" is defined as the powdered form of dry non-fat cocoa solids obtained from the cocoa beans. In the sense of the present disclosure, cocoa powder is prepared by fermenting, drying, roasting, separating the beans from their skins, and grinding the cocoa beans into cocoa mass. Said cocoa mass is then pressed to separate the cocoa butter from the non-fat cocoa solids. The non-fat cocoa solids are then powdered to form cocoa powder. Optionally, the cocoa powder may be treated with an alkaline to neutralize its acids. Cocoa powder contains a remainder of cocoa butter and hence contains fat. In a preferred embodiment, the cocoa powder contains about 11 wt.-% of fat based on the total weight of the cocoa powder.

As used herein, the term "allulose" refers to a low-calorie epimer of the monosaccharide sugar fructose, which is also known as psicose or CAS number 551-68-8.

As used herein, the term "milk powder" refers to a dairy product which is prepared by evaporating milk to dryness. There are several kinds of milk powder, such as skim milk powder and whole milk powder.

As used herein, the term "skim milk powder" refers to the product obtained by removing all of the water from pasteurised skim milk. In other words, skim milk powder is a lower-calorie, lower-fat version of milk that has been made into a powder form.

As used herein, the term "whole milk powder" refers to the product obtained by removing all of the water from pasteurised whole milk. In other words, whole milk powder is a full-fat version of milk that has been made into a powder form.

As used herein, the term "chocolate composition" refers to the entire recipe or formulation of the chocolate, including at least one ingredient from a cocoa bean selected from the group consisting of cocoa mass, cocoa powder, and cocoa butter; and allulose; and optionally a caloric sweetener, and/or a bulking agent, and/or an emulsifier, and/or a flavoring agent, and/or a milk powder.

As used herein, the temperature at which the conching step is performed is defined as the maximum temperature between loading and/or emptying of the conche. In other words, the temperature at which conching is carried out is the temperature of the composition to be conched when loaded into the conche, and/or the temperature of the conched composition when the composition is removed from the conche.

As used herein, the period of time for which the conching is performed may also be referred to as the conching time. In the sense of the present disclosure, the period of time for which the conching is performed is the period of time between the end of the loading of the conche with the composition to be conched and the start of removing the conched composition from the conche.

As used herein, the term "amorphous" relates to a solid which is non-crystalline and hence lacks a long-range order, which is a characteristic of a crystal or "crystalline allulose" as used herein. It is understood that an amorphous substance, such as an amorphous sweetener may be transformed into a crystalline sweetener under the influence of moisture. Without being bound by theory, a phase transfer of an amorphous substance may occur, when the amorphous substance dissolves and then crystallizes again under release of moisture. Such crystals then act as seed crystals, promoting the crystallization of further molecules of the amorphous substance. Thus, large crystals/agglomerates/grit is formed.

As used herein, the term "crystalline" refers to a solid material whose constituents (such as atoms, molecules, or ions) are arranged in a highly ordered microscopic structure, forming a crystal lattice that extends in all directions.

As used herein, the term "caloric sweetener" is defined as a food additive that is added to a food composition to confer a sweet taste to said food composition and has an energy content of at least 0.5 kcal/g. Examples of caloric sweeteners include sucrose, glucose, fructose, maltose, galactose, invert sugar, maltose, and trehalose.

As used herein, the term "non-caloric sweetener" is defined as a food additive that is added to a food composition to confer a sweet taste to said food composition and has an energy content of less than 0.5 kcal/g. Examples of non-caloric sweeteners include acesulfam, advantam, aspartam, acesulfam-salt, cyclamat, neohesperidin DC, neotam, saccharin, the steviolglycoside "Stevia", sucralose, thaumatin, monkfruit, and mogrosid.

As used herein, the term "milk components" refers to milk powder, lactose, and butter fat.

As used herein, the term "bulking agent" refers to an ingredient that is added to a chocolate composition to increase its volume ore bulk without significantly altering the taste and texture of the chocolate composition. Examples of bulking agents include polydextrose, maltodextrin, oligofructose, fibers, dextrin, inulin, acacia fibre, arabinoxylan, beet root fibre, cassava fibre, cocoa shell powder, corn starch, guar gum, gum acaia, locust bean gum, rice starch, corn fibre, and mixtures thereof.

As used herein, the term "standard milk chocolate" refers to a commercially available chocolate comprising of from about 45 wt.-% to about 60 wt.-% of a caloric sweetener, preferably sucrose, based on the total weight of the standard milk chocolate. According to a preferred embodiment, the term "standard milk chocolate" refers to a commercially available chocolate comprising of from about 50 wt.-% to about 55 wt.%, such as 52 wt.-% or 53 wt.-% of a caloric sweetener, preferably sucrose, based on the total weight of the standard milk chocolate.

As used herein, the standard milk chocolate has a calorie content in the range of from about 530 kcal/100 g to about 560 kcal/100 g, preferably about 554 kcal/100 g or about 537 kcal/100 g.

As used herein, the term "standard dark chocolate" refers to a commercially available dark chocolate comprising about 40 wt.-% to about 50 wt.-% of sucrose, preferably about 45 wt.-% of sucrose. As used herein, the standard dark chocolate has a calorie content in the range of from about 530 kcal/100 g to about 550 kcal/100 g, preferably about 538 kcal/100 g or about 543 kcal/100 g.

As used herein, the term "standard white chocolate" refers to a commercially available white chocolate comprising about 40 wt.-% to about 50 wt.-% of sucrose, preferably about 45 wt.-% sucrose. As used herein, the standard white chocolate has a calorie content in the range of from about 560 kcal/100 g to about 580 kcal/100 g, preferably about 567 kcal/100 g.

As used herein, the term "sugar-reduced" refers to a chocolate composition, wherein the amount of caloric sweetener is reduced by about 20 % or more, preferably by about 25 % or more, more preferably by about 30 % or more in relation to the amount of caloric sweetener, preferably sucrose, comprised in the respective standard chocolate composition. In other words, a sugar-reduced milk chocolate composition comprises about 80 % or less, preferably 75% or less, more preferably 70% or less of caloric sweetener based on the amount of caloric sweetener, preferably sucrose, comprised in the standard milk chocolate. A chocolate composition comprises about 70 % or less of caloric sweetener based on the amount of caloric sweetener, preferably sucrose, comprised in the standard dark chocolate. A sugar-reduced white chocolate composition comprises about 70 % or less of caloric sweetener based on the amount of caloric sweetener, preferably sucrose, comprised in the standard white chocolate.

As used herein, the term "calorie-reduced" refers to a chocolate composition, wherein the calorie content of the chocolate composition is reduced by about 20 % or more, preferably by about 25 % or more, more preferably by about 30 % or more in relation to the calorie content of the respective standard chocolate composition. In other words, a calorie-reduced milk chocolate composition has a calorie content about 80 % or less, preferably about 75% or less, more preferably about 70% or less based on the calorie content of the standard milk chocolate. A calorie-reduced dark chocolate composition has a calorie content of about 80 % or less, preferably about 75% or less, more preferably about 70% or less based on the calorie content of the standard dark chocolate. A calorie-reduced white chocolate composition has a calorie content of about 80 % or less, preferably about 75% or less, more preferably about 70 % or less based on the calorie content of the standard white chocolate.

As used herein, the term "cooling effect" refers to a cool mouthfeel upon melting of a chocolate composition in the mouth. Without being bound by theory, it is assumed that melting of crystalline substances such as allulose requires a certain amount of energy. Upon melting, energy is absorbed from the surroundings in the mouth which results in a cooling feeling.

As used herein, the moisture content of a material, such as the moisture content of allulose, is determined gravimetrically by putting a sample of defined weight ($w_{sample}$) into a vessel, heating the vessel to 105 °C until the mass does not change. Then, the mass of the heated sample ($w_{dry}$) is determined. The moisture content is determined as:

$$\text{moisture content} = \frac{w_{sample} - w_{dry}}{w_{sample}} * 100\ \%$$

As used herein, the calorie content of a material is determined as:

As used herein, the term "carbohydrate content" refers to the amount of caloric sweeteners, starch, and cellulose contained in 100 g of material, such as 100 g of chocolate composition.

As used herein, the term "at least one ingredient from a cocoa bean selected from the group consisting of cocoa mass, cocoa powder, and cocoa butter" refers to one of said ingredients alone, or a mixture of two of said ingredients, or a mixture of all of said ingredients. A preferred mixture of two ingredients from a cocoa bean is a mixture of cocoa mass and cocoa butter. Another preferred mixture of two ingredients from a cocoa bean is a mixture of cocoa powder and cocoa butter.

As used herein, the term "fat content" refers to the amount of fat, such as cocoa butter, contained in 100 g of material, such as 100 g of chocolate composition. The fat content (CF) is determined by calculation, specifically using the formula

$$CF = CB \cdot 1 + CM \cdot 0.53 + CP \cdot 0.11 + MP * MFC$$

wherein CB is the amount of cocoa butter in wt.-% based on the total weight of the composition, CM is the amount of cocoa mass in wt.-% based on the total weight of the composition, CP is the amount of cocoa powder in wt.-% based on the total weight of the composition, MP is the amount of milk powder in wt.-% based on the total weight of the composition, and MFP is the amount of fat in g contained in 100 g of the milk powder. It is understood that the content of fat of cocoa butter is 100 %, the content of fat of cocoa mass is about 53 %, and the content of fat of cocoa powder is about 11 %. As set out herein, the skilled person can tailor the content of fat of milk powder, e.g. to about 15 g, about 16 g, about 17 g, about 18 g, about 19 g, or about 20 g in 100 g of milk powder.

As used herein, the term "protein content" refers to the amount of proteins contained in 100 g of material, such as 100 g of chocolate composition.

The determination of fat content, protein content, and carbohydrate content is routine in the field of food technology and may be achieved by routine means.

As used herein, the terms "Kakaoverordnung", or "German Regulation on Cocoa and Chocolate Products of 15 December 2003", or "KakaoV 2003" refer to the German regulation relating to cocoa and chocolate products, i.e. the German "Verordnung über Kakao- und Schokoladenerzeugnisse (Kakaoverordnung)", of 15 December 2003, published in the Bundesgesetzblatt (German Federal Law Gazette) I, volume 63, page 2738 on 23 December 2003, which implements the EU directive 2000/36 of the European Parliament and the Council of 23 June 2000 as amended on 5 July 2017, published in the Bundesgesetzblatt (German Federal Law Gazette) I, volume 45, page 2280 on 5 July 2017.

## Examples

The present invention as illustratively described in the following may suitably be practiced in the absence of any element or elements, limitation or limitations, not specifically disclosed herein.

Allulose was obtained from Savanna Ingredients GmbH (Elsdorf, Germany). The preparation of allulose is disclosed i.a. in WO 2018/087261 A1. Cocoa butter, cocoa mass, and cocoa powder were prepared by common means known in the art or obtained from commercial suppliers. All other ingredients were obtained from commercial suppliers.

Example 1: Preparation of chocolate composition

The raw materials were mixed in a mixer to give raw mixtures of the following compositions:

**Table 1** Overview of chocolate composition

|  | Composition 1A | Comparative Composition 2A |
|---|---|---|
| Cocoa butter | 17.20 | 11.08 |
| Cocoa mass | 10.74 | 13.97 |
| Skim milk powder (1% fat) | 10.35 | - |
| Whole milk powder (28% fat) | 17.63 | 32.55 |
| sugar | 18.09 | - |
| Allulose | 25.53 | 42.36 |
| Malt aroma | 0.41 | - |
| Vanillin aroma | 0.05 | 0.06 |

The composition was mixed, pre-refined and refined. After refining was completed, the compositions were subjected to conching.

Comparative composition 2A corresponds to the composition of example 2 of WO 2018/084538.

Example 2: Conching

Before conching, an additional portion of cocoa butter and lecithin were added to give the final composition:

**Table 2** Overview of chocolate composition for conching

|  | Composition 1B | Composition 2B | Composition 2C |
|---|---|---|---|
| Cocoa butter | 21.66 | 19.09 | 19.03 |
| Cocoa mass | 10.10 | 12.69 | 12.65 |
| skim milk powder (1% fat) | 9.7 | - | - |
| whole milk powder (28% fat) | 16.6 | 29.57 | 29.48 |
| sugar | 17.00 | - | - |
| Allulose | 24.00 | 38.49 | 38.37 |
| Malt aroma | 0.39 | - | - |
| Vanillin aroma | 0.05 | 0.05 | 0.05 |
| Lecithin | 0.50 | 0.14 | 0.41 |

The compositions were subjected to conching under different conditions as summarized in the following:

**Table 3** Conditions of conching

| Chocolate | Composition | Conching time [h] | Conching Temperature [°C] |
|---|---|---|---|
| 1* | 2B | 72 | 55 |
| 2 | 2C | 72 | 55 |
| 3 | 2C | 5 | 40 |
| 4 | 1B | 5 | 40 |
| * Severe formation of agglomerates was observed. | | | |

Example 3: Sensory evaluation

After conching, the chocolate compositions were molded and then tasted by four trained people to assess the sensory properties of the different compositions and manufacturing methods:

**Table 4** Sensory evaluation of chocolate compositions

| Chocolate | Composition | Taste | Texture |
|---|---|---|---|
| 1 | 2B | Weak cheese note, milky, clear and significant cocoa, in the aftertaste pointed sweetness. | Clearly sandy, peaty at the beginning, delayed melting, easily occupying, sticky in the mouth, little cooling effect. |
| 2 | 2C | Weak cheese note, milky, clearly cocoa-like, in the aftertaste pointed sweetness | Clearly sandy, peaty at the beginning, delayed melting, easily occupying, sticky in the mouth, little cooling effect. |
| 3 | 2C | Cocoa, milky, sweet, in the finish pointed sweetness | Smooth, noticeable cooling effect, brisk melting |
| 4 | 1B | Cocoa-like, intensely milky, balanced sweetness | Smooth, delicately melting, long-lasting creamy in the mouth, very weak cooling effect |
| Reference milk chocolate | | Cocoa-like, intensely milky, balanced sweetness | Smooth, delicately melting, long-lasting creamy in the mouth, no cooling effect |

The results of sensory evaluation are further illustrated in Figure 1.

The sensory evaluation and the consensus profile of the samples serve the standard description of the perceptible sensory attributes. Based on the sensory evaluation, the conching for 5 h at 40 °C is to be preferred, since the texture described there corresponds best to the expectations of a milk chocolate. Likewise, in the taste, the selected low temperature prevents the formation of an incipient cheese note in the milk chocolate.

## Particular embodiments of the present disclosure

1. A chocolate composition comprising

    i) at least one ingredient from a cocoa bean selected from the group consisting of cocoa mass, cocoa powder, and cocoa butter; and
    ii) allulose.

2. The chocolate composition according to embodiment 1, wherein the composition comprises cocoa mass in an amount of about 95 wt.-% or less based on the total weight of the chocolate composition, preferably of about 80 wt.-% or less based on the total weight of the chocolate composition, more preferably of about 75 wt.-% or less based on the total weight of the chocolate composition; more preferably of about 50 wt.-% or less based on the total weight of the chocolate composition, more preferably of about 35 wt.-% or less based on the total weight of the chocolate composition, yet more preferably of about 30 wt.-% or less based on the total weight of the chocolate composition, even more preferably of about 25 wt.-% or less based on the total weight of the chocolate composition, most preferably of about 20 wt.-% or less based on the total weight of the chocolate composition.

3. The chocolate composition according to any one of embodiments 1 or 2, wherein the composition comprises cocoa mass in an amount of about 1 wt.-% or more based on the total weight of the chocolate composition, preferably of about 3 wt.-% or more based on the total weight of the chocolate composition, more preferably of about 5 wt.-% or more based on the total weight of the chocolate composition; more preferably of about 7 wt.-% or more based on the total weight of the chocolate composition, most preferably of about 8 wt.-% or less based on the total weight of the chocolate composition.

4. The chocolate composition according to any one of embodiments 1 to 3, wherein the composition comprises cocoa mass in an amount of from about 3 wt.-% to about 95 wt.-% based on the total weight of the chocolate composition, preferably about 3 wt.-% to about 80 wt.-% based on the total weight of the chocolate composition, more preferably about 3 wt.-% to about 75 wt.-% based on the total weight of the chocolate composition, even more preferably about 3 wt.-% to about 50 wt.-% based on the total weight of the chocolate composition, even more preferably about 3 wt.-% to about 35 wt.-% based on the total weight of the chocolate composition, yet more preferably in an amount of from 5 wt.-% to about 30 wt.-% based on the total weight of the chocolate composition, still more preferably in an amount of from 7 wt.-% to 25 wt.-% based on the total weight of the chocolate composition, most preferably in an amount of from about 8 wt.-% to about 20 wt.-% based on the total weight of the chocolate composition.

5. The chocolate composition according to any one of embodiments 1 to 4, the chocolate composition comprises cocoa butter in an amount of about 50 wt.-% or less based on the total weight of the chocolate composition, preferably in an amount of about 40 wt.-% or less based on the total weight of the chocolate composition, more preferably in an amount of about 35 wt.-% or less based on the total weight of the chocolate composition, yet more preferably in an amount of about 30 wt.-% or less based on the total weight of the chocolate composition, even more preferably in an amount of about 25 wt.-% or less based on the total weight of the chocolate composition, most preferably in an amount of about 24 wt.-% or less based on the total weight of the chocolate composition.

6. The chocolate composition according to any one of embodiments 1 to 5, wherein the chocolate composition comprises cocoa butter in an amount of about 1 wt.-% or more based on the total weight of the chocolate composition, preferably in an amount of about 5 wt.-% or more based on the total weight of the chocolate composition, more preferably in an amount of about 10 wt.-% or more based on the total weight of the chocolate composition, yet more preferably in an amount of about 15 wt.-% or more based on the total weight of the chocolate composition most preferably in an amount of about 20 wt.-% or more based on the total weight of the chocolate composition.

7. The chocolate composition according to any one of embodiments 1 to 6, wherein the chocolate composition comprises cocoa butter in an amount in the range of from about 1 wt.-% to about 50 wt.-%, preferably in an amount in the range of from about 5 wt.-% to about 40 wt.-%, more preferably in an amount in the range of from about 5 wt.-% to about 35 wt.-%, more preferably in an amount of from about 10 wt.-% to about 35 wt.-% based on the total weight of the chocolate composition, yet more preferably in an amount of from about 15 wt.-% to about 30 wt.-% based on the total weight of the chocolate composition, still more preferably in an amount of from about 17 wt.-% to about 25 wt.-% based on the total weight of the chocolate composition, most preferably in an amount of from about 20 wt.-% to about 24 wt.-% based on the total weight of the chocolate composition.

8. The chocolate composition according to any one of embodiments 1 to 7, wherein the chocolate composition further comprises milk powder.

9. The chocolate composition according to embodiment 4 or 5, wherein the chocolate composition comprises milk powder in an amount of about 35 wt.-% or less based on the total weight of the chocolate composition, preferably in an amount of about 30 wt.-% or less based on the total weight of the chocolate composition, more preferably in an amount of about 29 wt.-% or less based on the total weight of the chocolate composition, more preferably in an amount of about 28 wt.-% or less based on the total weight of the chocolate composition.

10. The chocolate composition according to embodiment 8, wherein the chocolate composition comprises milk powder in an amount of from about 5 wt.-% to about 35 wt.-% based on the total weight of the chocolate composition, preferably in an amount of from about 8 wt.-% to about 30 wt.-% based on the total weight of the chocolate composition, more preferably in an amount of from about 10 wt.-% to about 29 wt.-% based on the total weight of the chocolate composition, more preferably in an amount of from about 12 wt.-% to about 28 wt.-% based on the total weight of the chocolate composition.

11. The chocolate composition according to any one of embodiment 1 to 10, wherein the chocolate composition comprises allulose in an amount of from about 10 wt.-% to about 60 wt.-% based on the total weight of the chocolate composition, preferably in an amount of from about 15 wt.-% to about 50 wt.-% based on the total weight of the chocolate composition, more preferably in an amount of from about 20 wt.-% to about 45 wt.-% based on the total weight of the chocolate composition, more preferably in an amount of from about 20 wt.-% to about 40 wt.-% based on the total weight of the chocolate composition, more preferably in an amount of from about 22 wt.-% to about 38 wt.-% based on the total weight of the chocolate composition, most preferably in an amount of from about 22 wt.-% to about 37 wt.-% based on the total weight of the chocolate composition.

12. The chocolate composition according to any one of embodiments 1 to 11, wherein the allulose is provided in the form of a powder.

13. The chocolate composition according to any one of embodiments 1 to 12, wherein the allulose has an amorphous content in an amount of about 10 wt.-% or less based on the total weight of the allulose, preferably about 8 wt.-% or less based on the total weight of the allulose, more preferably about 6 wt.-% or less based on the total weight of the allulose, more preferably about 5 wt.-% or less based on the total weight of the allulose, more preferably about 4 wt.-% or less based on the total weight of the allulose, more preferably about 3 wt.-% or less based on the total weight of the allulose, more preferably about 2 wt.-% or less based on the total weight of the allulose, most preferably about 1 wt.-% or less based on the total weight of the allulose.

14. The chocolate composition according to any one of embodiments 1 to 13, wherein the allulose has a moisture content of about 5 wt.-% or less based on the total weight of the allulose, preferably wherein the allulose has a moisture content about 4 wt.-% or less based on the total weight of the allulose, more preferably wherein the allulose has a moisture content about 3 wt.-% or less based on the total weight of the allulose, more preferably wherein the allulose has a moisture content about 2.5 wt.-% or less based on the total weight of the allulose, most preferably wherein the allulose has a moisture content about 2 wt.-% or less based on the total weight of the allulose.

15. The chocolate composition according to any one of embodiments 1 to 14, wherein the chocolate composition further comprises a caloric sweetener.

16. The chocolate composition according to embodiment 15, wherein the chocolate composition comprises the caloric sweetener in an amount of about 20 wt.-% or less based on the total weight of the chocolate composition, preferably in an amount of about 19 wt.-% or less based on the total weight of the chocolate composition, more preferably in an amount of about 18 wt.-% or less based on the total weight of the chocolate composition.

17. The chocolate composition according to embodiment 15 or 16, wherein the chocolate composition comprises the caloric sweetener in an amount of about 5 wt.-% or less based on the total weight of the chocolate composition, more preferably in an amount of about 2.5 wt.-% or less based on the total weight of the chocolate composition, more preferably in an amount of about 2 wt.-% or less based on the total weight of the chocolate composition, most preferably in an amount of about 1.5 wt.-% or less based on the total weight of the chocolate composition.

18. The chocolate composition according to any one of embodiments 1 to 17, wherein the caloric sweetener is selected from glucose, fructose, sucrose, maltose, galactose, invert sugar, trehalose, tagatose, honey, agave sugar, coconut blossom sugar, brown sugar, cacao fruit sugar, maple sugar, molasses, rice syrup, isomaltulose, kojibiose, L-arabiose, ribose, sorbose, yacon syrup, lactose, laetose, allose and mixtures thereof.

19. The chocolate composition according to any one of embodiments 1 to 18, wherein the chocolate composition further comprises a bulking agent.

20. The chocolate composition according to embodiment 19, wherein the chocolate composition comprises the bulking agent in an amount of from about 1 wt.-% to about 40 wt.-% based on the total weight of the chocolate composition, preferably in an amount of from about 5 wt.-% to about 30 wt.-% based on the total weight of the chocolate composition, more preferably in an amount of from about 10 wt.-% to about 25 wt.-% based on the total weight of the chocolate composition, more preferably in an amount of from about 12 wt.-% to about 22 wt.-% based on the total weight of the chocolate composition, most preferably in an amount of from about 15 wt.-% to about 20 wt.-% based on the total weight of the chocolate composition.

21. The chocolate composition according to embodiment 19 or 20, wherein the bulking agents selected from the group consisting of polydextrose, maltodextrin, oligofructose, fibers, dextrin, inulin, acacia fibre, arabinoxylan, beet root fibre, cassava fibre, cocoa shell powder, corn starch, guar gum, gum acaia, locust bean gum, rice starch, corn fibre and mixtures thereof.

22. The chocolate composition according to any one of embodiments 1 to 21, wherein the chocolate composition further comprises an emulsifier.

23. The chocolate composition according to embodiment 22, wherein the chocolate composition comprises the emulsifier in an amount of about 5 wt.-% or less based on the total weight of the chocolate composition, preferably in an amount of about 3 wt.-% or less based on the total weight of the chocolate composition, more preferably in an amount of about 2 wt.-% or less based on the total weight of the chocolate composition, more preferably in an amount of about 1 wt.-% or less based on the total weight of the chocolate composition, most preferably in an amount of about 0.75 wt.-% or less based on the total weight of the chocolate composition.

24. The chocolate composition according to embodiments 22 or 23, wherein the emulsifier is selected from the group consisting of lecithin, monoglycerin fatty acid ester, sorbitan fatty acid ester, polyglycerin polyricinoleate, and mixtures thereof.

25. The chocolate composition according to any one of embodiments 1 to 24, wherein the chocolate composition further comprises a flavoring agent.

26. The chocolate composition according to embodiment 25, wherein the flavoring agent is selected from the group consisting of vanilla flavor, malt flavor, caramel flavor, milk flavor, and mixtures thereof.

27. The chocolate composition according to any one of embodiments 1 to 26, wherein the chocolate composition comprises about 75 % or less of a caloric sweetener based on the content of caloric sweetener comprised in a standard milk chocolate, preferably about 70 % or less of a caloric sweetener based on the content of caloric sweetener comprised in a standard milk chocolate, more preferably about 60 % or less of a caloric sweetener based on the content of caloric sweetener comprised in a standard milk chocolate, most preferably about 50 % or less of a caloric sweetener based on the content of caloric sweetener comprised in a standard milk chocolate.

28. The chocolate composition according to any one of embodiments 1 to 27, wherein the chocolate composition does not show a "cooling effect" in the mouth upon sensory evaluation.

29. The chocolate composition according to any one of embodiments 1 to 28, wherein the chocolate composition has a calorie content in the range of from about 200 to 600 kcal per 100 g of the chocolate composition, preferably in the range of from about 250 to about 550 kcal per 100 g of the chocolate composition, more preferably in the range of from about 300 to about 500 kcal per 100 g of the chocolate composition, more preferably in the range of from about 300 to about 470 kcal per 100 g of the chocolate composition, most preferably in the range of from about 300 to about 400 kcal per 100 g of the chocolate composition.

30. The chocolate composition according to any one of embodiments 1 to 29, wherein the chocolate composition is a sugar-reduced milk chocolate composition comprising

a) cocoa mass in an amount of from about 8 wt.-% to about 12 wt.-%, and
b) cocoa butter in an amount of from about 20 wt.-% to about 24 wt.-%, and
c) allulose in an amount of from about 22 wt.-% to about 26 wt.-%, and
d) milk powder in an amount of from about 24 wt.-% to 28 wt.-%, and
e) a caloric sweetener in an amount of from about 15 wt.-% to about 19 wt.-%,

each based on the total weight of the sugar-reduced milk chocolate composition.

31. The chocolate composition according to any one of embodiments 1 to 29, wherein the chocolate composition is a calorie-reduced milk chocolate composition comprising

a) cocoa mass in an amount of from about 8 wt.-% to about 12 wt.-%, and
b) cocoa butter in an amount of from about 20 wt.-% to about 24 wt.-%, and
c) allulose in an amount of from about 33 wt.-% to about 37 wt.-%, and
d) milk powder in an amount of from about 12 wt.-% to 16 wt.-%, and
e) a caloric sweetener in an amount of 2 wt.-% or less,

each based on the total weight of the calorie-reduced milk chocolate composition.

32. A method of manufacturing a chocolate composition, the method comprising the steps of

a) providing at least one ingredient from a cocoa bean selected from the group consisting of cocoa mass, cocoa powder, and cocoa butter, and allulose; and
b) mixing the components from step a) to provide a composition I; and
c) conching the composition I to yield the chocolate composition according to any one of embodiments 1 to 31.

33. The method of manufacturing a chocolate composition according to embodiment 32, wherein step a) further comprises providing at least one of milk powder, a bulking agent, a caloric sweetener, an emulsifier, and/or a flavoring agent.

34. The method of manufacturing a chocolate composition according to embodiment 32 or 33, wherein step c) is carried out at a temperature of less than 45 °C, preferably at a temperature of about 44 °C or less, more preferably at a temperature of about 43 °C or less, more preferably at a temperature of about 42 °C or less, at a temperature of about 41.5 °C or less, more preferably at a temperature of about 41 °C or less, most preferably at a temperature of about 40 °C or less.

35. The method of manufacturing a chocolate composition according to any one of embodiments 32 to 34, wherein step c) is carried out at a temperature in the range of from about 35 °C to less than 45 °C, preferably at a temperature in the range of from about 36 °C to about 44 °C, more preferably at a temperature in the range of from about 37 °C to about 43 °C, more preferably at a temperature in the range of from about 38 °C to about 42 °C, more preferably at a temperature in the range of from about 38.5 °C to about 41.5 °C, most preferably at a temperature in the range of from about 39 °C to about 41 °C.

36. The method of manufacturing a chocolate composition according to any one of embodiments 32 to 35, wherein step c) is carried out for a duration of about 10 h or less, preferably for a duration of about 8 h or less, more preferably for a duration of about 7 h or less, more preferably for a duration of about 6 h or less, most preferably for a duration of about 5 h or less.

37. The method of manufacturing a chocolate composition according to any one of embodiments 32 to 36, wherein step c) is carried out for a duration of from about 1 h to about 10 h, preferably for a duration of from about 2 h to about 8 h, more preferably for a duration of from about 2 h to about 7 h, more preferably for a duration of about from about 3 h to 6 h, more preferably for a duration of about from about 4 h to 6 h.

38. The method of manufacturing a chocolate composition according to any one of embodiments 32 to 37, wherein step c) is carried out at a temperature in the range of from about 38 °C to about 42 °C for a duration of from about 3 h to 6 h, more preferably at a temperature in the range of from about 38.5 °C to about 41.5 °C for a duration of from about 3 h to 6 h, most preferably at a temperature in the range of from about 39 °C to about 41 °C for a duration of about from about 4 h to 6 h.

39. The method of manufacturing a chocolate composition according to any one of embodiments 32 to 38, wherein the composition I comprises cocoa butter in an amount of from about 5 wt.-% to about 30 wt.-% based on the total weight of composition I, preferably in an amount of from 5 wt.-% to about 25 wt.-% based on the total weight composition I, more preferably in an amount of from 8 wt.-% to about 22 wt.-% based on the total weight of composition I, more preferably in an amount of from 10 wt.-% to about 20 wt.-% based on the total weight of composition I, most preferably in an amount of from 12 wt.-% to about 16 wt.-% based on the total weight of composition I.

40. The method of manufacturing a chocolate composition according to any one of embodiments 32 to 39, wherein step c) comprises adding cocoa butter in an amount of from about 1 wt.-% to about 15 wt.-% based on the total weight of the chocolate composition, preferably of from about 2 wt.-% to about 12 wt.-% based on the total weight of the chocolate composition, more preferably of from about 3 wt.-% to about 10 wt.-% based on the total weight of the chocolate composition, most preferably of from about 4 wt.-% to about 8 wt.-% based on the total weight of the chocolate composition.

41. The method of manufacturing a chocolate composition according to any one of embodiments 32 to 40, wherein the composition I comprises an emulsifier in an amount of about 2 wt.-% or less based on the total weight of composition I, preferably in an amount of 1.5 wt.-% or less based on the total weight of composition I, more preferably in an amount of 1 wt.-% or less based on the total weight of composition I, more preferably in an amount of 0.75 wt.-% or less based on the total weight of composition I, most preferably in an amount of 0.5 wt.-% or less based on the total weight of composition I.

42. The method of manufacturing a chocolate composition according to any one of embodiments 32 to 41, wherein step c) comprises adding emulsifier in an amount of about 5 wt.-% or less based on the total weight of the chocolate composition, preferably in an amount of about 3 wt.-% or less based on the total weight of the chocolate composition, more preferably in an amount of about 2 wt.-% or less based on the total weight of the chocolate composition, more preferably in an amount of about 1 wt.-% or less based on the total weight of the chocolate composition, most preferably in an amount of about 0.75 wt.-% or less based on the total weight of the chocolate composition.

43. A chocolate composition produced by a method according to any one of embodiments 32 to 42.

44. The chocolate composition according to embodiment 43, produced by conching at a temperature in the range of from about 38 °C to about 42 °C and for a duration of from about 3 h to 6 h, more preferably at a temperature in the range of from about 38.5 °C to about 41.5 °C and for a duration of from about 3 h to 6 h, most preferably at a temperature in the range of from about 39 °C to about 41 °C and for a duration of about from about 4 h to 6 h.

45. A confectionary product comprising a chocolate composition according to any one of embodiment 1 to 31, 43 or 44.

46. The confectionary product according to embodiment 45, wherein the confectionary product is a chocolate product or a chocolate substitute product.

47. The confectionary product according to embodiment 45 or 46, wherein the confectionary product is a chocolate product or chocolate substitute product according to the requirements of the German Regulation on Cocoa and Chocolate Products of 15 December 2003 (KakaoV 2003).

48. The confectionary product according to any one of embodiments 45 to 47, wherein the confectionary product is a chocolate product selected from the group consisting of milk chocolate, dark chocolate, white chocolate and vegan chocolate.

49. The confectionary product according to any one of embodiments 45 to 48, wherein the confectionary product is a dark chocolate.

50. The confectionary product according to any one of embodiments 45 to 48, wherein the confectionary product is a milk chocolate.

**Claims**

1.  A chocolate composition comprising

    i) at least one ingredient from a cocoa bean selected from the group consisting of cocoa mass, cocoa powder, and cocoa butter; and
    ii) allulose.

2.  The chocolate composition according to claim 1, wherein the composition comprises cocoa mass in an amount of from about 3 wt.-% to about 95 wt.-% based on the total weight of the chocolate composition, preferably about 3 wt.-% to about 80 wt.-% based on the total weight of the chocolate composition, more preferably about 3 wt.-% to about 75 wt.-% based on the total weight of the chocolate composition, even more preferably about 3 wt.-% to about 50 wt.-% based on the total weight of the chocolate composition, even more preferably about 3 wt.-% to about 35 wt.-% based on the total weight of the chocolate composition, yet more preferably in an amount of from 5 wt.-% to about 30 wt.-% based on the total weight of the chocolate composition, still more preferably in an amount of from 7 wt.-% to 25 wt.-% based on the total weight of the chocolate composition, most preferably in an amount of from about 8 wt.-% to about 20 wt.-% based on the total weight of the chocolate composition; and/or
    wherein the chocolate composition comprises cocoa butter in an amount in the range of from about 1 wt.-% to about 50 wt.-%, preferably in an amount in the range of from about 5 wt.-% to about 40 wt.-%, more preferably in an amount in the range of from about 5 wt.-% to about 35 wt.-%, more preferably in an amount of from about 10 wt.-% to about 35 wt.-% based on the total weight of the chocolate composition, yet more preferably in an amount of from about 15 wt.-% to about 30 wt.-% based on the total weight of the chocolate composition, still more preferably in an amount of from about 17 wt.-% to about 25 wt.-% based on the total weight of the chocolate composition, most preferably in an amount of from about 20 wt.-% to about 24 wt.-% based on the total weight of the chocolate composition.

3.  The chocolate composition according to claim 1 or 2, wherein the chocolate composition comprises allulose in an amount of from about 10 wt.-% to about 60 wt.-% based on the total weight of the chocolate composition, preferably in an amount of from about 15 wt.-% to about 50 wt.-% based on the total weight of the chocolate composition, more preferably in an amount of from about 20 wt.-% to about 45 wt.-% based on the total weight of the chocolate composition, more preferably in an amount of from about 20 wt.-% to about 40 wt.-% based on the total weight of the chocolate composition, more preferably in an amount of from about 22 wt.-% to about 38 wt.-% based on the total weight of the chocolate composition, most preferably in an amount of from about 22 wt.-% to about 37 wt.-% based on the total weight of the chocolate composition.

4.  The chocolate composition according to any one of claims 1 to 3, wherein the allulose has an amorphous content in an amount of about 10 wt.-% or less based on the total weight of the allulose, preferably about 8 wt.-% or less based on the total weight of the allulose, more preferably about 6 wt.-% or less based on the total weight of the allulose, more preferably about 5 wt.-% or less based on the total weight of the allulose, more preferably about 4 wt.-% or less based on the total weight of the allulose, more preferably about 3 wt.-% or less based on the total weight of the allulose, more preferably about 2 wt.-% or less based on the total weight of the allulose, most preferably about 1 wt.-% or less based on the total weight of the allulose.

5.  The chocolate composition according to any one of claims 1 to 4, wherein the allulose has a moisture content of about 5 wt.-% or less based on the total weight of the allulose, preferably wherein the allulose has a moisture content about 4 wt.-% or less based on the total weight of the allulose, more preferably wherein the allulose has a moisture content about 3 wt.-% or less based on the total weight of the allulose, more preferably wherein the allulose has a moisture content about 2.5 wt.-% or less based on the total weight of the allulose, most preferably wherein the allulose has a moisture content about 2 wt.-% or less based on the total weight of the allulose.

6.  The chocolate composition according to any one of claims 1 to 5, wherein the chocolate composition does not show a "cooling effect" in the mouth upon sensory evaluation.

7.  The chocolate composition according to any one of claims 1 to 6, wherein the chocolate composition has a calorie content in the range of from about 200 to 600 kcal per 100 g of the chocolate composition, preferably in the range of from about 250 to 550 kcal per 100 g of the chocolate composition, more preferably in the range of from about 300 to 500 kcal per 100 g of the chocolate composition, more preferably in the range of from about 300 to 450 kcal per 100 g of the chocolate composition, most preferably in the range of from about 300 to 400 kcal per 100 g of the chocolate composition.

8. The chocolate composition according to any one of claims 1 to 7, wherein the chocolate composition is a sugar-reduced milk chocolate composition comprising

    a) cocoa mass in an amount of from about 8 wt.-% to about 12 wt.-%, and
    b) cocoa butter in an amount of from about 20 wt.-% to about 24 wt.-%, and
    c) allulose in an amount of from about 22 wt.-% to about 26 wt.-%, and
    d) milk powder in an amount of from about 24 wt.-% to 28 wt.-%, and
    e) a caloric sweetener in an amount of from about 15 wt.-% to about 19 wt.-%,

each based on the total weight of the sugar-reduced milk chocolate composition.

9. The chocolate composition according to any one of claims 1 to 7, wherein the chocolate composition is a calorie-reduced milk chocolate composition comprising

    a) cocoa mass in an amount of from about 8 wt.-% to about 12 wt.-%, and
    b) cocoa butter in an amount of from about 20 wt.-% to about 24 wt.-%, and
    c) allulose in an amount of from about 33 wt.-% to about 37 wt.-%, and
    d) milk powder in an amount of from about 12 wt.-% to 16 wt.-%, and
    e) a caloric sweetener in an amount of 2 wt.-% or less,

each based on the total weight of the calorie-reduced milk chocolate composition.

10. A method of manufacturing a chocolate composition, the method comprising the steps of

    a) providing at least one ingredient from a cocoa bean selected from the group consisting of cocoa mass, cocoa powder, and cocoa butter, and allulose; and
    b) mixing the components from step a) to provide a composition I; and
    c) conching the composition I to yield the chocolate composition according to any one of claims 1 to 9.

11. The method of manufacturing a chocolate composition according to claim 10, wherein step c) is carried out

    a) at a temperature of less than 45 °C, preferably at a temperature of about 44 °C or less, more preferably at a temperature of about 43 °C or less, more preferably at a temperature of about 42 °C or less, at a temperature of about 41.5 °C or less, more preferably at a temperature of about 41 °C or less, most preferably at a temperature of about 40 °C or less; or
    b) at a temperature in the range of from about 35 °C to less than 45 °C, preferably at a temperature in the range of from about 36 °C to about 44 °C, more preferably at a temperature in the range of from about 37 °C to about 43 °C, more preferably at a temperature in the range of from about 38 °C to about 42 °C, more preferably at a temperature in the range of from about 38.5 °C to about 41.5 °C, most preferably at a temperature in the range of from about 39 °C to about 41 °C.

12. The method of manufacturing a chocolate composition according to claim 10 or 11, wherein step c) is carried out

    a) for a duration of about 10 h or less, preferably for a duration of about 8 h or less, more preferably for a duration of about 7 h or less, more preferably for a duration of about 6 h or less, most preferably for a duration of about 5 h or less; or
    b) for a duration of from about 1 h to about 10 h, preferably for a duration of from about 2 h to about 8 h, more preferably for a duration of from about 2 h to about 7 h, more preferably for a duration of about from about 3 h to 6 h, more preferably for a duration of about from about 4 h to 6 h.

13. The method of manufacturing a chocolate composition according to any one of claims 10 to 12, wherein step c) is carried out at a temperature in the range of from about 38 °C to about 42 °C for a duration of from about 3 h to 6 h, more preferably at a temperature in the range of from about 38.5 °C to about 41.5 °C for a duration of from about 3 h to 6 h, most preferably at a temperature in the range of from about 39 °C to about 41 °C for a duration of about from about 4 h to 6 h.

14. A chocolate composition produced by a method according to any one of claims 10 to 13.

15. A confectionary product comprising a chocolate composition according to any one of claims 1 to 9 or 14.

Fig. 1

Europäisches Patentamt
European Patent Office
Office européen des brevets

# EUROPEAN SEARCH REPORT

**Application Number**

EP 24 17 0029

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 536 159 A1 (SAMYANG CORP [KR]) 11 September 2019 (2019-09-11) | 1-11,14, 15 | INV. A23G1/32 A23G1/40 |
| Y | * paragraphs [0026], [0034]; claims; examples * | 13 | |
| X | US 2023/088659 A1 (ST JOHN JAMES [US] ET AL) 23 March 2023 (2023-03-23) | 1-3,5-7, 10,12, 14,15 | |
| | * paragraphs [0062] - [0068]; claims; examples; table 1 * | | |
| X | KR 102 268 544 B1 (SAMYANG CORP [KR]) 24 June 2021 (2021-06-24) | 1-3,5-7, 10,11, 14,15 | |
| Y | * claims; examples * | 13 | |
| X | WO 2022/251500 A1 (DOJO BRANDS LLC [US]) 1 December 2022 (2022-12-01) * tables 1, 2 * | 1-3,5-7, 10,14,15 | |
| X | US 2022/095642 A1 (WANG XIAOYING [US] ET AL) 31 March 2022 (2022-03-31) * tables 1, 2 * | 1-3,5-7, 10,14,15 | TECHNICAL FIELDS SEARCHED (IPC) A23G |
| Y | WO 2016/097068 A1 (AEGIS NV [BE]) 23 June 2016 (2016-06-23) * page 10 * | 13 | |
| Y | WO 2023/166192 A1 (NESTLE SA [CH]) 7 September 2023 (2023-09-07) * page 16 * | 13 | |

The present search report has been drawn up for all claims

| Place of search | Date of completion of the search | Examiner |
|---|---|---|
| The Hague | 23 September 2024 | Bondar, Daniela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 0029

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2024

| Patent document cited in search report | | Publication date | Patent family member(s) | | Publication date |
|---|---|---|---|---|---|
| EP 3536159 | A1 | 11-09-2019 | CN | 110113951 A | 09-08-2019 |
| | | | EP | 3536159 A1 | 11-09-2019 |
| | | | JP | 6833991 B2 | 24-02-2021 |
| | | | JP | 2019533471 A | 21-11-2019 |
| | | | US | 2019269140 A1 | 05-09-2019 |
| | | | WO | 2018084538 A1 | 11-05-2018 |
| US 2023088659 | A1 | 23-03-2023 | AU | 2022347027 A1 | 14-03-2024 |
| | | | CA | 3227195 A1 | 23-03-2023 |
| | | | CN | 117940022 A | 26-04-2024 |
| | | | EP | 4401567 A1 | 24-07-2024 |
| | | | JP | 2024533410 A | 12-09-2024 |
| | | | KR | 20240052948 A | 23-04-2024 |
| | | | US | 2023088659 A1 | 23-03-2023 |
| | | | US | 2024122203 A1 | 18-04-2024 |
| | | | WO | 2023044305 A1 | 23-03-2023 |
| KR 102268544 | B1 | 24-06-2021 | NONE | | |
| WO 2022251500 | A1 | 01-12-2022 | US | 2023072004 A1 | 09-03-2023 |
| | | | WO | 2022251500 A1 | 01-12-2022 |
| US 2022095642 | A1 | 31-03-2022 | CA | 3126077 A1 | 30-07-2020 |
| | | | US | 2022095642 A1 | 31-03-2022 |
| | | | WO | 2020154332 A1 | 30-07-2020 |
| WO 2016097068 | A1 | 23-06-2016 | EP | 3302070 A1 | 11-04-2018 |
| | | | WO | 2016097068 A1 | 23-06-2016 |
| WO 2023166192 | A1 | 07-09-2023 | AU | 2023229032 A1 | 25-07-2024 |
| | | | WO | 2023166192 A1 | 07-09-2023 |

EPO FORM P0459

For more details about this annex : see Official Journal of the European Patent Office, No. 12/82

**EP 4 631 359 A1**

**REFERENCES CITED IN THE DESCRIPTION**

**Patent documents cited in the description**

- WO 2018084538 A

- WO 2018087261 A1

**Non-patent literature cited in the description**

- *CHEMICAL ABSTRACTS*, 551-68-8